(19) **Europäisches Patentamt**
**European Patent Office**
**Office européen des brevets**

(11) **EP 1 610 992 B1**

(12) **EUROPÄISCHE PATENTSCHRIFT**

(45) Veröffentlichungstag und Bekanntmachung des Hinweises auf die Patenterteilung:
**18.05.2011 Patentblatt 2011/20**

(21) Anmeldenummer: **04723620.3**

(22) Anmeldetag: **26.03.2004**

(51) Int Cl.:
***B60T 7/22*** *(2006.01)*        ***B60T 8/32*** *(2006.01)*
***B60T 8/174*** *(2006.01)*        ***B60T 8/1761*** *(2006.01)*
***B60T 8/1755*** *(2006.01)*        ***B60R 21/01*** *(2006.01)*
***B60K 31/00*** *(2006.01)*

(86) Internationale Anmeldenummer:
**PCT/EP2004/050384**

(87) Internationale Veröffentlichungsnummer:
**WO 2004/085220 (07.10.2004 Gazette 2004/41)**

(54) **ELEKTRONISCHES STEUERSYSTEM FÜR EIN FAHRZEUG UND VERFAHREN ZUM ERMITTELN EINES VOM FAHRER UNABHÄNGIGEN EINGRIFFS IN EIN FAHRZEUGSYSTEM**

ELECTRONIC CONTROL SYSTEM FOR A VEHICLE AND METHOD FOR DETERMINING AT LEAST ONE DRIVER-INDEPENDENT INTERVENTION IN A VEHICLE SYSTEM

SYSTEME DE COMMANDE ELECTRONIQUE D'UN VEHICULE ET PROCEDE PERMETTANT DE DETERMINER AU MOINS UNE INTERVENTION, INDEPENDANTE DU CONDUCTEUR, DANS UN SYSTEME VEHICULE

(84) Benannte Vertragsstaaten:
**DE FR IT**

(30) Priorität: **26.03.2003 DE 10313650**

(43) Veröffentlichungstag der Anmeldung:
**04.01.2006 Patentblatt 2006/01**

(73) Patentinhaber: **Continental Teves AG & Co. oHG**
**60488 Frankfurt am Main (DE)**

(72) Erfinder:
• **DIEBOLD, Jürgen**
**65760 Eschborn (DE)**

• **KLUG, Michael**
**63225 Langen (DE)**

(74) Vertreter: **Graf, Ulrich**
**Continental Teves AG & Co.oHG**
**Guerickestrasse 7**
**60488 Frankfurt am Main (DE)**

(56) Entgegenhaltungen:
**EP-A- 0 976 627        WO-A-03/006289**
**DE-A- 10 060 498        DE-A- 10 103 401**
**DE-A- 19 916 267        DE-C- 4 338 068**
**DE-C- 4 413 172        DE-C- 10 121 386**

EP 1 610 992 B1

**Beschreibung**

Die Erfindung betrifft ein elektronisches Steuersystem für ein Fahrzeug und ein Verfahren zum Ermitteln mindestens eines vom Fahrer unabhängigen Eingriffs in ein Fahrzeugsystem nach dem Oberbegriff des Anspruchs 1 bzw. 28. Insbesondere betrifft die Erfindung ein Verfahren zur Unfall- und Verletzungsvermeidung durch die Integration der aktiven und passiven Sicherheitsmittel und der aktiven Fahrdynamikregelung in ein elektronisches Steuersystem eines Fahrzeugs.

1. Stand der Technik

Passive Sicherheitssysteme zur Vermeidung von unfallbedingten Verletzungen sind in der Vergangenheit im wesentlichen getrennt und unabhängig von aktiven Sicherheitssystemen zur Vermeidung von Unfällen entwickelt worden.

Bei den ersten entscheidenden Verbesserungen der passiven Sicherheit Mitte der 60er Jahre mit der Sicherheits-Fahrgastzelle, dem Dreipunkt-Gurt bis hin zur späteren Weiterentwicklung der Knautschzone war von einem Durchbruch bei der Verbesserung der aktiven Sicherheit noch nicht zu sprechen. Erst mit der großen Verbreitung des ABS Anfang der 80er Jahre ist die Basis für aktive, elektronische Sicherheitssysteme gelegt worden.

In der Zwischenzeit sind sowohl für die aktive als auch für die passive Sicherheit elektronisch gesteuerte Systeme wie ESP-Fahrdynamikregelungen, ACC, Gurtstraffer und Airbags im Einsatz.

Das ganze Potential der einzelnen Systeme wird allerdings nur dann voll genutzt, wenn die Systeme vernetzt sind und Informationen über den Fahrzustand, das Fahrzeugumfeld und den Fahrer selbst allen Subsystemen zur Verfügung stehen. Der Vernetzungsgedanke ist in einem ersten Schritt im Projekt Verkürzter Anhalteweg (Reduced Stopping Distance RSD, Arbeitstitel "30m Auto", Continental-Konzern, Dezember 2000) auf dem Gebiet der aktiven Sicherheitssysteme umgesetzt worden. Als Grundlage zur Verkürzung des Bremswegs dient ein spezifischer Bremsreifen, der durch seine bionische Struktur bei Aufprägen einer Bremskraft seine Radaufstandsfläche nicht nur vergrößert, sondern auch für eine homogene Verteilung der Kräfte im Reifenlatsch sorgt. Damit wird die maximal mögliche Verzögerung unter optimalen Straßenverhältnissen auf ca. 1,3 g erhöht. Um dieses hohe Bremsmoment im Notbremsfall auf die Straße übertragen zu können, ist ein Eingriff in die Stoßdämpfer erforderlich, um die bremsstoßinduzierte Nickschwingung in Richtung Aperiodizität abzudämpfen. Dadurch findet das ABS bessere Regelbedingungen vor und kann effizienter wirken. Das mittlere übertragbare Bremsmoment wird durch die minimierten Radlastschwankungen erhöht. Insbesondere beim Schlupfeinlauf am Beginn der Notbremsung kann durch die Vernetzung der verstellbaren Dämpfer mit der ABS-Regelung zielgenauer das Optimum des Radschlupfes eingeregelt werden.

Eine weitere Verkürzung des gesamten Anhaltevorgangs wird durch den schnelleren möglichen Druckaufbau durch die Verwendung einer elektrohydraulischen Bremsanlage (EHB) umgesetzt. Dabei wird die Betätigung des Bremspedals analysiert und mit Unterstützung durch einen Bremsassistenten (BA) der Druck aus einem Druckspeicher in die Bremsanlage gespeist. Damit lässt sich die Schwellenzeit reduzieren und somit der Weg, der vom Zeitpunkt des ersten Bremspedalkontakts bis zum vollen Aufbau der Bremsleistung zurückgelegt wird, verkürzen.

In der nächsten Verbesserung ist die Vernetzung auf die Einbindung von Umfeldinformationen ausgedehnt worden. Ein 77 GHz Radar- oder ein LIDAR- Abstandssensor aus dem Adaptive Cruise Control (ACC) liefert Abstand und Relativgeschwindigkeit von den Fahrzeugen, die sich vor dem eigenen Fahrzeug befinden. Die komfortorientierte ACC-Regelung nutzt diese Daten, um dem Fahrer ein entspanntes, von Routineaufgaben (Abstandshalten) entlastetes, ermüdungsfreies Fahren zu ermöglichen.

Ein aktiviertes ACC- System erhöht jedoch auch die Sicherheit für einen unaufmerksamen Fahrer. Das ACC erkennt eine gefährliche Situation und leitet eine Fremdbremsung bei kritischem Abstand und Relativgeschwindigkeit bis zum erlaubten Limit von 2 bis 3 m/s$^2$ ein. Reicht diese Verzögerung nicht aus, um eine Kollision zu vermeiden, wird der Fahrer durch ein Signal gewarnt und zur Übernahme der Bremsung aufgefordert.

Damit wird der Weg, den ein unaufmerksamer Fahrer zurücklegt, bis er die Gefahr erkannt hat und beginnt seinen Fuß auf das Bremspedal umzusetzen, verkürzt.

Diese Reaktionswegverkürzung kann bei der konsequenten Vernetzung von Abstandssensor und Bremsanlage auch dann genutzt werden, wenn das ACC- System abgeschaltet ist. Übernimmt der Fahrer in dieser gefährlichen Situation die Bremsung, unterstützt der erweiterte Bremsassistent (BA+) den Fahrer beim weiteren Bremsdruckaufbau.

Aus der DE 198 06 687 A1 ist ein Verfahren zur Verhinderung einer Kollision eines Fahrzeugs mit einem vor dem Fahrzeug angeordneten Objekt bekannt. Dabei werden der Abstand und die Relativgeschwindigkeit zwischen Fahrzeug und Hindernis sowie die Geschwindigkeit und die Beschleunigung bzw. Verzögerung des Fahrzeugs erfasst und abhängig hiervon Kollisionshinweise oder Bremsvorgänge ausgelöst. Dabei soll ein Bremsvorgang nur eingeleitet werden, wenn der erfasste Abstand kleiner als zwei berechnete Abstände ist. Der eine berechnete Abstand gibt einen Mindestabstand wieder, bei dem eine Kollision bei einer maximalen Verzögerung vermieden werden kann, während der andere Abstand ein Vorbeilenken des Fahrzeugs an dem Objekt ermöglichen soll.

Ferner ist aus der WO 03/006289 ein Verfahren zum automatischen Auslösen einer Verzögerung eines Fahrzeugs zur Verhinderung einer Kollision mit einem weiteren Objekt bekannt, bei dem in Abhängigkeit von Radar- oder Lidarsignalen oder Videosignalen Objekte im Kursbereich des Fahrzeugs detektiert sowie Bewegungsgrößen des Fahrzeugs erfasst werden. In Abhängigkeit von dem erkannten Objekt und der Bewegungsgrößen soll ein Gefährdungspotential bestimmt werden. Nach Maßgabe dieses Gefährdungspotentials sollen die Verzögerungsmittel in mindestens drei Zuständen betrieben werden. Darüber hinaus ist eine Verminderung der Folgen einer bevorstehenden Kollision mit einem weiteren Objekt vorgesehen, indem passive oder aktive Rückhaltesysteme aktiviert werden.

Weiterhin ist aus der EP 0976627 A1 ein Bremssteuer-Regelsystem für ein Fahrzeug nach dem Oberbegriff des Anspruchs 1 bekannt, bei dem eine vom Fahrer durchgeführte Bremsbetätigung von einem automatischen Bremsmittel unterstützt wird, wenn während des vom automatischen Bremsmittel ausgeführten automatischen Bremsbetriebs der Bremswunsch des Fahrers durch ein Bremswunscherfassungsmittel erfasst wird.

2. Beschreibung und Vorteile der Erfindung

Der Erfindung liegt die Aufgabe zugrunde, ein elektronisches Steuersystem und ein Verfahren zur Verhinderung einer Kollision und/oder zur Verminderung der Folgen einer Kollision mit einem Objekt zu schaffen, welches gegen die Fahrereinschätzung gerichtete Fehleingriffe bzw. Fehlanregelungen vermeidet und dennoch bei gefährlichen Fahrsituationen den Fahrer optimal unterstützt und erforderliche Schutzmaßnahmen veranlasst.

Erfindungsgemäß wird diese Aufgabe dadurch gelöst, dass ein gattungsgemäßes elektronisches Steuersystem für ein Fahrzeug mit einem Gefahrenrechner und einem Fahrerwunschmodul so ausgestaltet wird, dass der Gefahrenrechner ein Modell zur Berechnung von die Aktivierungszeit der Fahrzeugaktuatoren und längsdynamische sowie querdynamische Fahrsituationen berücksichtigenden Gefahrenpotentialen aufweist,
dass in Abhängigkeit von den Gefahrenpotentialen gestufte Stelleingriffe zur Steuerung der Fahrzeugaktuatoren ermittelt werden,
dass in Abhängigkeit von der durch die Stelleingriffe verursachten Beeinflussung der Fahrdynamik des Fahrzeugs eine Bewertung mit dem im Fahrerwunschmodul ermittelten Fahrerwunsch vorgenommen wird, und
dass nach Maßgabe des Bewertungsergebnisses die gestuften Stelleingriffe bedingt freigeschaltet, freigeschaltet oder gesperrt werden.

Ferner wird die Aufgabe dadurch gelöst, dass ein gattungsgemäßes Verfahren zum Ermitteln mindestens eines vom Fahrer unabhängigen Eingriffs in ein Fahrzeugsystem, mit einem Gefahrenrechner und einem Fahrerwunschmodul so durchgeführt wird, dass dass der Gefahrenrechner ein Modell zur Berechnung von die Aktivierungszeit der Fahrzeugaktuatoren und längsdynamische sowie querdynamische Fahrsituationen berücksichtigenden Gefahrenpotentialen aufweist,
dass in Abhängigkeit von den Gefahrenpotentialen gestufte Stelleingriffe zur Steuerung der Fahrzeugaktuatoren ermittelt werden,
dass in Abhängigkeit von der durch die Stelleingriffe verursachten Beeinflussung der Fahrdynamik des Fahrzeugs eine Bewertung mit dem im Fahrerwunschmodul ermittelten Fahrerwunsch vorgenommen wird, und
dass nach Maßgabe des Bewertungsergebnisses die gestuften Stelleingriffe bedingt freigeschaltet, freigeschaltet oder gesperrt werden.

Mit dem erfindungsgemäßen Steuerungssystem und dem erfindungsgemäßen Verfahren werden in einer tatsächlichen und/oder vermeintlichen Unfallsituation Daten, die aus vorgegebenen und aktuellen Fahrzeugdaten, Umfelddaten und Fahrerdaten, sowie weiteren Daten, wie ggf. noch Personendaten innerhalb und außerhalb des Fahrzeugs und dgl. in einem Gefahrenrechner Gefahrenpotentiale für Personen innerhalb und/oder außerhalb des Fahrzeugs und des Fahrzeugs bzw. von Objekten ermittelt. Weiterhin werden in einem Fahrerwunschmodul aus Pedalwegen, Umsetzbewegungen zwischen den Pedalen und Bremsdrücken der Bremsanlage und weiteren Größen bzw. Zuständen, wie z.B. Lenkwinkeländerungen, Gaspedalwegen, Bremsleuchten An/Aus und/oder Ableitungen der vorstehenden Daten und Größen der Fahrerwunsch ermittelt. Als wesentliche Fahrerwünsche können sich eine Beschleunigung oder Verzögerung und/oder eine Fahrtrichtungsänderung ergeben. Aus der Korrelation der Daten, die den Fahrerwunsch wiedergeben und den Gefahrenpotentialen, werden in dem Gefahrenrechner ermittelte Stelleingriffe für die Aktuatoren eines Fahrzeugs in einer Arbitriereinheit bedingt freigeschaltet, freigeschaltet oder gesperrt. Unter bedingter Freischaltung werden Stelleingriffe von ausgewählten Aktuatoren verstanden, während vom Gefahrenrechner gleichzeitig ausgegebene Stelleingriffe von anderen Aktuatoren gesperrt bzw. unterdrückt werden. Durch die Einschätzung bzw. Bewertung der Gefahr für Personen und Objekte und der Korrelation dieser Einschätzung bzw. Bewertung mit dem tatsächlichen Wunsch des Fahrers bezüglich seines Fahrverhaltens in der eingeschätzten bzw. bewerteten Gefahrensituation können aus aktuellen Fahrsituationen mit Gefahrenpotential erzeugte Stelleingriffe für Aktuatoren regelungstechnisch unterdrückt, modifiziert bzw. anteilig freigeschaltet (z.B. ein Stelleingriff in die Bremsen von 40 bar wird auf einen Bremsdruck von 20 bar reduziert) oder freigeschaltet werden. Die Einschätzung der Gefahrensituation durch den Gefahrenrechner wird "fahreradaptiv" gestaltet, so dass in Abhängigkeit von dem ermittelten Gefahrenpotential und von dem Fahrerwunsch die Stelleingriffe ausführt, gesperrt oder verändert werden.

Hierbei können Stelleingriffe nur in Abhängigkeit von dem Gefahrenpotential freigeschaltet werden, ohne mit dem Fahrerwunsch abitriert zu werden. Dabei ist ein Kriterium für die "Nichtberücksichtigung" des Fahrerwunsches der Einfluß auf die Fahrdynamik dieses Eingriffs.

Vorteilhaft werden in dem Gefahrenrechner verschiedene Gefahrenpotentiale ermittelt und zur Bildung der Stelleingriffe zweckmäßig kombiniert, wobei ein Gefahrenpotential aus einem Fuzzysystem berechnet wird. Die Stelleingriffe werden dann mit dem Fahrerwunsch abgeglichen, was zweckmäßig in einem Zustandsautomaten realisiert wird. Um die komplexe Fahrsituation umfassend bewerten zu können, werden Gefahrenpotentiale im Hinblick auf unterschiedliche Anwendungsbereiche gebildet. Die Gefahrenpotentiale unterscheiden sich in allgemeine Potentiale und spezielle Potentiale. Unter einem allgemeinen Gefahrenpotential versteht man aktuatorunabhängige, wie Gefahrenpotentiale aus Umfeldinformationen und Fahrzeugdaten, die die längsdynamische Kritikalität der Fahrsituation bewerten.

Unter einem speziellen Gefahrenpotential versteht man aktuatorspezifische, wie ein Gefahrenpotential das aufgrund von Sensorinformationen, Fahrzeugdaten und aktuatorspezifischen Kenngrößen, wie Aktivierungszeiten, die Fahrsituation bewertet.

Der Gefahrenrechner, dessen Eingang vorgegebene Fahrzeugdaten, Umfelddaten, aktuelle Fahrzeug- und Fahrerdaten, Personendaten innerhalb und außerhalb des Fahrzeugs und dgl. zugeführt werden, nimmt dabei eine Bewertung der Gefahrenlage des Fahrzeugs und der im und außerhalb des Fahrzeugs vorhandenen Personen vor. In Abhängigkeit von der Bewertung und ggf. weiterer Kriterien oder Gewichtungen gibt der Gefahrenrechner gestufte Stelleingriffe bzw. Ansteuersignale aus, die Aktuatoren steuern, die das Fahrverhalten des Fahrzeugs und/oder den Insassenschutz und/oder haptische und/oder optische und/oder akustische Gefahren-Rückmeldungen und/oder weitere reversible/nicht reversible Verstellaktuatorik und/oder Schutzmittel für weitere Verkehrsteilnehmer (Fussgänger, Radfahrer u.dgl.) derart ändern oder auslösen, dass eine maximale Schutzwirkung für die Personen und das Fahrzeug nach einer Prioritätsschaltung erreicht wird

Die Prioritätsschaltung legt dabei in Abhängigkeit von dem ermittelten Gefahrenpotential und anderen Kenngrößen fest, wie die gestuften Stelleingriffe priorisiert werden.

Vorteilhafte Weiterbildungen sind in den Unteransprüchen angegeben.

Vorteilhafterweise werden die Umsetzbewegung zwischen dem Gas- und dem Bremspedal aus Gaspedalweginformationen und der Bremslichtinformation als Eingangsgrößen des Fahrerwunschmoduls ermittelt. Dabei wird aus diesen zwei Eingangsgrößen die Umsetzzeit zwischen den Pedalen ermittelt.

In dem Fahrerwunschmodul wird aus den Daten mindestens ein Bremswunsch ermittelt und der nachgeschalteten Arbitriereinheit zur Verfügung stellt. Neben dem Bremswunsch wird zweckmäßig aus weiteren Daten ein Lenkwunsch und/oder Beschleunigungswunsch in dem Fahrerwunschmodul ermittelt und der nachgeschalteten Arbitriereinheit zur Verfügung gestellt.

Dem Gefahrenrechner werden zur Ermittlung des Gefahrenpotentials Eingangsdaten von Fahrzeugsystemen, wie Umfeldsystemen, Sitzverstellungen, Gurtstraffern, Pedalwegsensoren und/oder Fahrdynamikregelsystemen (ESP, ABS, ACC, BA) u.dgl. zur Verfügung gestellt. Erfindungsgemäß berechnet der Gefahrenrechner aus Daten, die mindestens die Fahrzeuglängsgeschwindigkeit, die Fahrzeuglängsbeschleunigung, die Fahrzeugquerbeschleunigung, die Abstände zu relevanten Objekten im Nah- und/oder Fernbereich, die Relativgeschwindigkeit zu relevanten Objekten im Nah- und/oder Fernbereich und/oder deren Ableitungen sowie Zustandsinformationen über Fahrdynamikregler, wie ABS, HBA, ESP u.dgl., wiedergeben, Gefahrenpotentiale, die mindestens in Abhängigkeit von ermittelten längsdynamischen und/oder querdynamischen Gefahrenkenngrößen in ihrer Wirkung gestufte, vom ermittelten Gefahrenpotential abhängige Stellgrößen für die Bremsen, die reversiblen Insassenschutzmittel und die Relativposition zwischen Insassenschutzmitteln und Fahrzeuginsassen verändernden Verstellvorrichtungen erzeugen.

Mittels dem Umfeldssystem kann der Gefahrenrechner gezielt mit den Informationen der Abstandssensorik neben den aktiven Sicherheitssystemen auch die passiven Sicherheitsmaßnahmen konditionieren. Die nicht reversiblen Insassenschutzmittel werden dabei vorkonditioniert, d.h. es werden zusätzliche Informationen vom Gefahrenrechner zur Verfügung gestellt. Diese Informationen können zur Veränderung der Aktivierungsschwellen verwendet werden. Das Verletzungsrisiko der Insassen wird reduziert, die Unfallschwere und Häufigkeit sinkt.

Mit der Entwicklung eines Precrash- Sensors (Closing Velocity - CV) bzw. der Integration der CV-Funktion in einen Radar- und/oder Infrarot-Sensor, wird die Zeit vor dem Unfall genutzt, um die zu erwartende Unfallschwere und geschätzte Aufprallrichtung bei der Eingriffsstrategie der Aktuatoren, wie z.B. die Auslösestrategie der Airbags, mit einzubeziehen. Neben der Verbesserung des Insassenschutzes dient der CV-Sensor auch zur Detektion von Fußgängern. Er bietet die Möglichkeit zusammen mit einer zusätzlichen Plausibilisierung über low-g Beschleunigungsaufnehmer (Satelliten) einen Schutz für Fußgänger zu realisieren.

Der Gewinn an Sicherheit durch das elektronische Steuersystem und das Verfahren lässt sich durch die Vernetzung der Komponenten und durch die zentrale Auswertung der Unfallwahrscheinlichkeit mit den Informationen der vernetzten Systeme erzielen. Dem Steuersystem und dem Verfahren liegt die Grundidee des Datenaustauschs unter Sicherheitssystemen zugrunde, die Informationen über den Fahrer, das Fahrzeug und das Fahrzeugumfeld haben. Dabei wird nicht nur ein Mehrwert für den Fahrer angestrebt, neue Funktionen mit vorhandenen Komponenten zu realisieren, sondern auch Kosten durch die Vernetzung der vorhanden Komponenten reduziert.

Der zentrale und vernetzende Part der Software stellt der Gefahrenrechner dar, bei dem alle Daten im Fahrzeug zusammenlaufen. Dort werden die Umfeldinformationen fusioniert und alle Daten analysiert. Die Umfeld-Datenfusion kann nach einer bevorzugten Ausführung auch in einem separaten Modul erfolgen, das dem Gefahrenrechner vorgeschaltet ist und ihm fusionierte Umfelddaten als relevante Daten für ein Sicherheitssystem zur Verfügung stellt. Für die aktuelle Fahrsituation wird ein Gefahrenpotential ermittelt, das die momentane Unfallwahrscheinlichkeit wiederspiegelt. Bei steigendem Gefahrenpotential werden dann stufenweise Maßnahmen eingeleitet, angefangen von Informationen und Warnungen für den Fahrer bis zur Aktivierung von reversiblen Rückhaltesystemen.

Ein wesentlicher Beitrag dazu liefert die Umfeldsensorik. Sie ermöglicht den sinnvollen Einsatz von reversiblen Maßnahmen zur passiven Sicherheit.

Ein weiterer Schritt in Richtung mehr Sicherheit wird mit der Einführung von bildverarbeitenden Kamerasystemen vollzogen. Damit wird erstmals neben der Objektdetektion auch eine Klassifizierung der Objekte möglich. Kombinierte Brems- und Lenkeingriffe werden den Fahrer bei der Unfallvermeidung unterstützen.

Eine Erhöhung der passiven Sicherheit und eine Minimierung des Verletzungsrisikos für die Fahrzeuginsassen wird durch die Ansteuerung der elektrischen Sitzverstellung aus dem Gefahrenrechner heraus erzielt. Es wird gezielt dem Submarining entgegengewirkt; ebenso wird ein nicht optimaler Abstand des Beifahrers zum Airbag korrigiert. Zur erforderlichen Ansteuerung bezieht der Gefahrenrechner seine Informationen zur Fahrsituation im einfachsten Fall aus den Regelzuständen der verbauten aktiven Sicherheitssysteme wie ESP, BA und Active Rollover Prevention (ARP).

Darüber hinaus kann der Gefahrenrechner zur weiteren Verbesserung der passiven Sicherheit in Abhängigkeit von dem ermittelten Gefahrenpotential Stellgrößen zum Schließen von Fahrzeugöffnungen erzeugen. Vorzugsweise werden die Fenster und das Schiebedach bei einem drohenden Unfall geschlossen. Steigt das Gefahrenpotential weiter und steht ein Crash unmittelbar bevor, so werden die Fahrzeuginsassen über einen elektromotorischen, reversiblen Gurtstraffer gesichert und positioniert. Sie nehmen durch die reduzierten Gurtlose früher an der Fahrzeugverzögerung teil. Ebenso sinkt das Risiko der Insassen verletzt zu werden weiter.

Vorteilhaft vorgesehen sind optische und/oder haptische Warn- und/oder Führungshinweise bzw. Handlungsanweisungen zum Warnen und/oder Leiten des Fahrers zu einer an die aktuelle Fahrzeugsituation angepassten Fahrerreaktion. Die Warnhinweise erfolgen vorzugsweise mittels eines vibrierenden Pedals und/oder Sitzes und/oder einer Anzeige.

Die Führungshinweise werden mittels einer veränderten Bedienkraft an mindestens einem Pedal und/oder der Lenkhandhabe gegeben, so dass der Fahrer über die zu- oder abnehmende Bedienkraft zu situationsgerechter Fahrzeugführung veranlasst wird.

Die eigentlichen Funktionen des Gefahrenrechners bestehen im wesentlichen in der

1. Berechnung fahrdynamischer Kennzahlen
2. Berechnung von Gefahrenpotentialen
3. Berechnung der Ansteuersignale (allgemeingültige Größe - nicht das eigentliche Aktuatoransteuersignal) aufgrund der Gefahrenpotentiale.

Es wird also eine abstrakte Ebene definiert, die die Situation in geeigneter Weise bewertet. Diese Ebene wird durch die Gefahrenpotentiale realisiert. Das Gefahrenpotential ist eine dimensionslose Größe im Bereich zwischen 0 und 100. Je größer das Gefahrenpotential ist, je gefährlicher ist auch die Situation. Die Aktuatoren werden lediglich aufgrund von Schwellenwertabfragen der Gefahrenpotentiale angesteuert. Dabei können mehrere Gefahrenpotentiale kombiniert werden, um einen Aktuator zu aktivieren. Dies bedeutet, dass die Zustandsbewertung zunächst nicht die Auswahl bzw. die Betätigungsdosierung der Aktuatoren beinhaltet. Dabei wird eine bestimmte Situation durch mehrere Gefahrenpotentiale bewertet. Dies lässt eine umfangreichere Bewertung der Situation zu. Es gibt Gefahrenpotentiale, die unabhängig von der Aktuatorik die Situation bewerten. So kann es beispielsweise ein Gefahrenpotential geben, das den längsdynamischen Fahrzustand bewertet. Entsprechend gibt es ein allgemeingültiges Gefahrenpotential, das den querdynamischen Fahrzustand beschreibt. Im Gegensatz zu diesen allgemeingültigen Gefahrenpotentialen gibt es auf bestimmte Aktuatoren zugeschnittene spezielle Gefahrenpotentiale. Diese Gefahrenpotentiale tragen der Tatsache Rechnung, dass unterschiedliche Aktuatoren auch unterschiedliche Aktivierungszeiten haben. Das bedeutet, dass die selbe Situation für einen Aktuator mit langer Aktivierungszeit vergleichsweise kritischer ist als für einen mit kurzer.

Es gibt also allgemeingültige und speziell auf Aktuatoren zugeschnittene Gefahrenpotentiale.

Die in dem elektronischen Steuersystem vorgesehene Arbitriereinheit weist vorzugsweise einen Zustandsautomaten auf, der das Verhalten des Fahrers anhand von Größen, die den Gaspedalweg, die Gaspedalgeschwindigkeit und die Umsetzzeit zwischen Gas- und Bremspedal und/oder den Zustand (An/Aus) des Bremslichts und/oder gemessene und/oder berechnete Bremsdrücke der Bremsanlage und/oder der Fahrzeugbeschleunigung und/oder deren Ableitungen wiedergeben in Korrelation zu einem von dem Gefahrenpotentialen abhängigen Ansteuergrößen arbitriert und in Abhängigkeit von dem Ergebnis Bremsdruckvorgaben des Gefahrenrechners freischaltet. In Abhängigkeit von der Entwicklung des Gefahrenpotentials (Wert und/oder Gradient) kann der Stelleingriff, wie der Bremseneingriff, auch autonom, d.h. gegen den Fahrerwunsch, stattfinden. Der autonome Stelleingriff, wie Bremseneingriff, ist dabei bzgl. dem Wert der Stellgröße, wie dem Bremsdruck, begrenzt.

In Abhängigkeit von dem Zustand der Arbitriereinheit werden dann Stelleingriffe für die Verzögerungseinrichtungen des Fahrzeugs zur Verfügung gestellt, die verschiedene Bremsdruckanforderungen beinhalten, die von einer Vorbefüllung der Bremsanlage zur Verringerung der Ansprechzeit bis zur maximalen Bremsdruckeinsteuerung reichen.

Hierzu wertet der Zustandsautomat das Verhalten des Fahrers aus und schaltet davon abhängig Bremsdruckvorgaben des Gefahrenrechners frei. Ausgewertet wird im wesentlichen die Fußbewegung des Fahrers. Diese lässt Rückschlüsse darüber zu, als wie gefährlich der Fahrer die gleiche Situation einschätzt bzw. ob er überhaupt eine kritische Situation erkannt hat. Erst wenn der Fahrer diese kritische Situation bestätigt, wird Fahrer unabhängig Bremsdruck aufgebaut. Es werden dabei vier Stufen unterschieden:

1. **not supported:** Der Fahrer zeigt durch einen positiven zeitlichen Gradienten auf dem Gaspedal an, beschleunigen zu wollen. Auch wenn der Gefahrenrechner eine kritische Situation detektiert, wird in diesem Zustand kein Bremsdruck autonom aufgebaut pmax = 0bar.

2. **prefill:** Dieses Niveau definiert einen Zustand bei dem der Verzögerungswunsch des Fahrers nur eingeschränkt bestimmt werden kann oder noch nicht vorhanden ist. In diesem Zustand muss der Fahrer das Gaspedal berühren. Es gibt zwei unterlagerte Zustände:

a) **prefill 1**: Das berechnete Gefahrenpotential hat einen zeitlichen Gradienten der oberhalb einer definierten Schwelle liegt. Der Fahrer verändert seine Gaspedalstellung nicht.
Diese Situation wird interpretiert als extreme Verschärfung der Gefahrensituation, so dass auch ohne aktive Bestätigung des Fahrers ein Bremsdruck von maximal $p1max = kl$ bar zugelassen wird. Dies führt zu einem Anlegen der Bremsbeläge ohne merkliche Verzögerung des Fahrzeugs.

b) **prefill 2**: Bestätigt der Fahrer die kritische Situation indem er das Gaspedal verlässt (negativer zeitlicher Gradient auf dem Gaspedal) wird ein maximaler Bremsdruck von $p2max > P1max$ zugelassen. Dies führt zu einer leichten Verzögerung des Fahrzeugs von 0,1 bis 0,2g.

3. **prebrake**: In diesem Zustand hat der Fahrer weder Gas- noch Bremspedal betätigt. Deshalb wird dieser Zustand als eingeschränkter Verzögerungswunsch interpretiert. Die maximale Verzögerung wird somit auf ungefähr das gesetzlich erlaubte Niveau angehoben (0.3g), so dass ein maximaler Bremsdruck von $p3max > p2max$ zustande kommen kann.

4. **extended brake assist**: Mit dem Übergang in diesen Zustand bestätigt der Fahrer seinen Verzögerungswunsch indem er das Bremspedal betätigt. Sind nun noch weitere Bedingungen erfüllt, wird abhängig vom Grad dieser Erfüllung der vom Gefahrenrechner vorgegebene Bremsdruck freigeschaltet.

Diese Bedingungen gliedern sich wie folgt:

Aus

a) dem zeitlichen Verlauf des Bremsdrucks und der Bremslichtinformation und
b) dem zeitlichen Verlauf des Gefahrenpotentials wird eine Notsituation abgeleitet. Wird diese erkannt, wird der vom Gefahrenrechner berechnete Bremsdruck vollständig als Sollwert an die Bremsanlage weitergeleitet. Der Fahrer erhält maximale Unterstützung. Wird hingegen keine Notsituation erkannt wird eine Kennzahl ermittelt, die den Grad des Bremswunsches des Fahrers repräsentiert. Dieser Faktor besteht aus drei Anteilen, die in einem bestimmten Gewichtungsverhältnis eingehen.

a) Verhältnis von Bremspedalweg zum Maximum des Bremspedalweges, der abhängig vom Druck in der Anlage ist (repräsentiert durch den Radbremsdruck) oder Verhältnis von Bremsdruck zum Maximum des Bremsdrucks der Bremsanlage. Dies ist notwendig, da der Fahrer den Bremsdruck in der Anlage spürt, falls diese vorgefüllt sein sollte.
b) Verhältnis von Bremspedalgeschwindigkeit zum Maximum der Bremspedalgeschwindigkeit oder Verhältnis von Bremsdruckänderung zum Maximum der Bremsdruckänderung. Dieses Maximum ist näherungsweise unabhängig vom Grad der Anlagenvorfüllung.
c) Faktor der die Umsetzzeit vom Gas- auf des Bremspedal bewertet.

Der Fahrer erhält in diesem Zustand durch Freischaltung des Bremsdruckes der im Gefahrenrechner ermittelt wird, eine an die Situation angepasste Bremsunterstützung.

Die konkrete Ausgestaltung hängt von der Ausstattung des Fahrzeugs ab. Das elektronische Steuersystem und das Verfahren zum Betreiben des Steuersystems ist daher bevorzugt modular aufgebaut, so dass Module für die aktiven Sicherheitssysteme ABS, ESP, TCS u.dgl. und der Gefahrenrechner parallel und separat Verzögerungsanforderungen und weitere Stelleingriffe berechnen können.

3. Technische Vorteile der Erfindung

- Hinzuziehung weiterer Eingangsgrößen, um weitere Gefahrenpotentiale zu ermitteln, die die Bewertung der Gefahrensituation verbessern und genauer beschreiben
- Erweiterbarkeit für weitere Ansteuerung neuer Aktuatoren, durch Einführung neuer oder Verwendung bekannter Gefahrenpotentiale
- Freischaltung der durch den Gefahrenrechner (virtueller Beifahrer) ermittelten Stelleingriffe abhängig von der Situationsbewertung des Fahrers und/oder weiterer Größen zur Bewertung der aktuellen Verkehrssituation wie z.B. Fahrzeug-Fahrzeug Kommunikation. Damit wirken sich Fehler in der Sensorik nicht maßgeblich auf das Systemverhalten aus oder werden in der Auswirkung beschränkt.
- Der Fahrer stellt eine Plausibilisierung für die vom Gefahrenrechner angeforderten Stelleingriffe dar.

4. Zeichnungen

Ein Ausführungsbeispiel der Erfindung ist in der Zeichnung dargestellt und wird im folgenden näher beschrieben.
Es zeigen

Fig. 1 eine Zustandsdarstellung über die Vernetzung der aktiven und passiven Fahrzeugsysteme mit dem elektronischen Steuersystem nach der Erfindung
Fig. 2 ein Blockschaltbild der Systemstruktur des elektronischen Steuersystems
Fig. 3 eine vereinfachte kategorisierte Darstellung der Differenz zwischen Soll- und Istabstand zu Verkehrteilnehmern
Fig. 4 eine Kategorisierung der Stelleingriffe (Ausgangsgrö- β en) mit Hilfe von Zugehörigkeitsfunktionen (MF: Membership- Funktion, im Beispiel werden Singletons ver- wendet).
Fig. 5 eine schematische Darstellung der Regelbasis für den Stelleingriff Sollverzögerung $a_{soll}$ in Abhängigkeit von Soll-, Istabstand und Relativgeschwindigkeit
Fig. 6 eine schematische Darstellung der Zustandsübergänge prefill, prbrake, extendet brake assist
Fig. 7 eine schematische darstellung der Zustandsübergänge prefill
Fig. 8 ein schematische Darstellung über die Aktivierung ei- nes Gurtstraffers
Fig. 9 eine schematische Darstellung einer sigmoidalen Über- gangsfunktion

5. Beschreibung von Ausführungsbeispielen

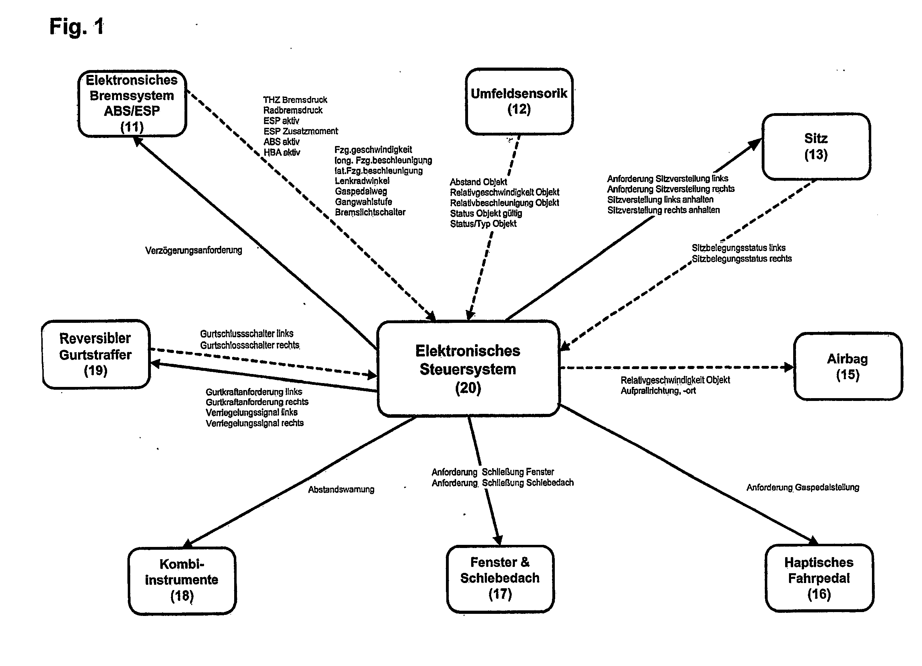

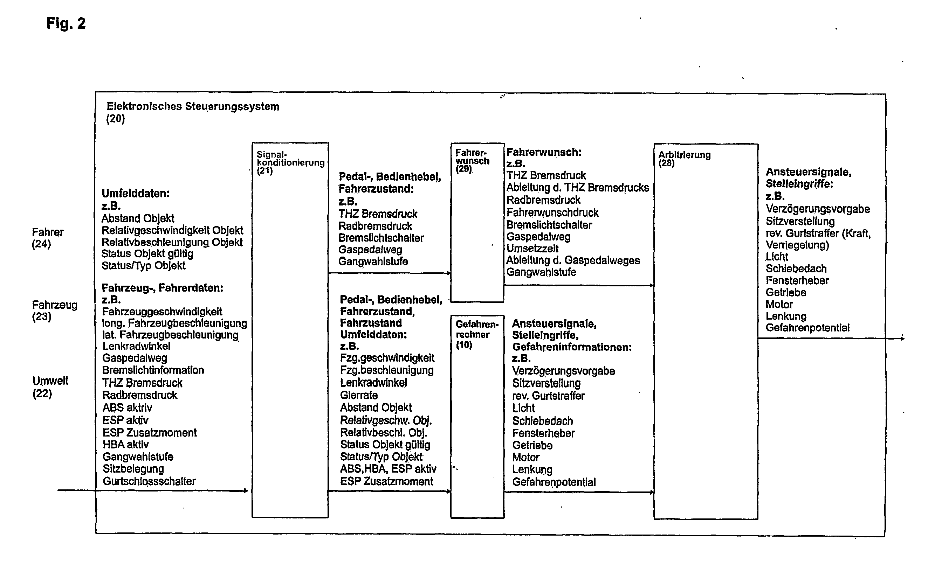

Figur 1 zeigt das mit dem elektronischen Steuersystem 20 vernetzte Gesamtsystem eines Fahrzeugs. In dem Steuersystem 20 wird anhand der Eingangssignale des ABS/ESP Bremssystems 11, des Umfeldsensorsystems 12, der elektrischen Sitzverstellung 13, der Gurtstraffer 19 und den daraus resultierenden gemessenen oder abgeleiteten internen und/oder externen Signalgrößen in einem Gefahrenrechner 10 (Fig. 2) von Gefahrenpotentialen abhängige Stelleingriffe berechnet. Die Ermittlung von Stelleingriffen für Aktuatoren basiert auf den folgenden Eingangsgrößen der mit dem Steuersystem 20 vernetzten Fahrzeugeinheiten:

1. Aus dem ABS/ESP Bremssystem 11 werden die Fahrzeuglängsgeschwindigkeit, Fahrzeuglängsbeschleunigung, die Fahrzeugquerbeschleunigung, der Lenkwinkel, der Radbremsdruck, der Bremsdruck im Tandem-Hauptzylinder, die Gangwahlstufe, das ESP Zusatzgiermoment und die Statussignale von Bremslichtschalter, Gaspedalweg und der Zustände des ABS, ESP, HBA ermittelt und dem elektronischen Steuersystem 20 zur Verfügung gestellt.
2. Aus dem Umfeldsensorsystem 12 werden der Abstand zum relevanten Objekt von einem Fernbereichssensor, die Relativgeschwindigkeit zum relevanten Objekt von einem Fernbereichssensor, die Relativbeschleunigung zum relevanten Objekt von einem Fernbereichssensor und die Statussignale relevantes Objekt vom Fernbereichssensor gültig und ggf. Informationen über den Typ des erkannten relevanten Objekts (z.B. Fußgänger, LKW u.dgl.) und dessen Zustand (steht, bewegt sich u.dgl.) dem Steuersystem 20 zur Verfügung gestellt.
3. Von der elektrischen Sitzverstellung 13 werden die Statussignale über die Sitzbelegung des Fahrersitzes und des Beifahrersitzes dem Steuersystem zur Verfügung gestellt.

4. Von der Steuerung der Gurtstraffer 14 werden die Statussignale über die Belegung der Gurtschlösser des Fahrer- und Beifahrersitzes dem Steuersystem zur Verfügung gestellt.

Wie der Figur 1 weiter zu entnehmen ist, ist das elektronische Steuersystem 20 weiterhin mit der Airbagsteuerung 15, einem haptischen Fahrpedal 16, der Steuerung der Fensterheber und des Schiebedachs 17 und der Anzeige 18 des Fahrzeugs vernetzt.

Figur 2 zeigt die Struktur des elektronischen Steuersystems 20. Dieses sieht eine Signalkonditionierung 21 vor, in die die Daten/Signale vom Fahrzeug 23, dem Fahrer 24 und der Umwelt 22 eingelesen werden. Die Signale werden anschließend konditioniert, so dass sie in der entsprechend richtigen Einheit zur Verfügung stehen. Außerdem kann eine Sensorfusion zwischen Fern- und Nahbereichssensor stattfinden, so dass die folgenden Softwaremodule 10, 28, 29 nur noch das fusionierte Sensorsignal als Abstands-, Geschwindigkeits und Beschleunigungssignal verwenden. Es ist ein einheitliches konsistentes Bild der Umwelt vorhanden. Dieses fusionierte Signal stellt demnach die relevante Objektliste (Abstand, Typ, Relativgeschwindigkeit...) dar, auf das der Gefahrenrechner 10 reagiert. Weiterhin ist mit der Signalkonditionierung 21 ein Modul 29 zur Erfassung des Fahrerwunsches verbunden. Hier werden spezifische Kenngrößen, wie Umsetzzeit zwischen den Pedalen, Fahrerwunschverzögerung u.dgl., von Eingangsgrößen abgeleitet, die den Fahrerwunsch im Hinblick auf die Führung des Fahrzeugs beschreiben.

In dem mit der Signalkonditionierung 21 verbundenen Gefahrenrechner 10 erfolgt die Bestimmung der Unfallwahrscheinlichkeit auf Basis der Eingangsdaten mit dem Ziel, die im Fahrzeug vorhandene Aktuatorik anzusteuern.

In einer besonders vorteilhaften Ausführungsform können folgende Daten als Eingangsgrößen verwendet werden, um die aktuelle Gefahrensituation (Gefahrenpotential und -richtung) zu ermitteln:

- Abstandsinformationen von Objekten (wie Fahrzeugen, stehende Hindernisse, u.dgl.) in Fahrzeugkoordinaten und relativ zum vorhergesagten Fahrschlauch der eigenen Fahrtrajektorie, deren Relativgeschwindigkeiten z.B. mittels Abstandssensorik oder mittels Erweiterung durch Nahbereichssensorik, insbesondere einer Precrash-Sensorik
- Sichtweitenabschätzung z.B. aus Abstandssensorik
- Kontaktsensorik am Fahrzeug (z.B. Glasfaser für Kontaktkraft, Beschleunigungssensoren) zur Ermittlung z.B. eines Fußgänger Crashs
- Klassifizierung der detektierten Objekte (Fußgänger, Ausdehnung der Objekte,..) z.B. mit Kamera und Bildverarbeitung
- Informationen über den Straßenverlauf (Geometriedaten, Kurvenradien, Spurbreite, Spuranzahl, ...), Verkehrsrichtzeichen und -vorschriftszeichen
- Telematikinformationen (Staumeldungen via TMC oder GSM, Straßenzustandsinformationen,..)
- Fahrdynamiksensoren und Modelle zur Ermittlung des Fahrzustands aus Radgeschwindigkeit, Gierrate, Längsbeschleunigung, Querbeschleunigung, Lenkwinkel, Lenkwinkelgeschwindigkeit, Schwimmwinkel, ESP Zusatzmoment und/oder Reibwert.)
- Betätigungszustände der Bedieneinrichtungen im Fahrzeug
- Sensoren zur Insassenerfassung und Klassifizierung (z.B. OOP, Kindersitzerkennung, Fahrerzustand wie Müdigkeit,...)
- Informationen über den potentiellen Kraftschlussbeiwert

5.1 Beschreibung der Funktion des Gefahrenrechners

Der Gefahrenrechner 10 führt im wesentlichen drei Verfahrensschritte durch.

Diese sind die

1. Berechnung fahrdynamischer Kennzahlen (Time to Collision ttc, Notwendige Verzögerung um eine Kollision zu verhindern, resultierende Fahrzeugbeschleunigung, Geschwindigkeit des Vorausfahrzeuges oder Objektes)

2. Berechnung von Gefahrenpotentialen

3. Berechnung der Ansteuersignale (allgemeingültige Größe - nicht das eigentliche Aktuatoransteuersignal) aufgrund der Gefahrenpotentiale.

Es wird dabei eine abstrakte Ebene definiert, die die Situation in geeigneter Weise bewertet. Diese Ebene wird durch die Gefahrenpotentiale realisiert. Das Gefahrenpotential ist eine dimensionslose Größe im Bereich zwischen 0 und 100. Je größer das Gefahrenpotential ist, je gefährlicher ist auch die Situation. Die Aktuaturen werden lediglich aufgrund von Schwellwertabfragen der Gefahrenpotentiale angesteuert. Dabei können mehrere Gefahrenpotentiale kombiniert werden, um einen Aktuator zu aktivieren. Dies bedeutet, dass die Zustandsbewertung zunächst nur eingeschränkt (siehe später spezielle Gefahrenpotentiale) bzw. nicht (siehe später allgemeingültige Gefahrenpotentiale) die Auswahl bzw. die Betätigungsdosierung der Aktuatoren beinhaltet. Aus den Ausführungen wird deutlich, dass eine bestimmte Situation durch mehrere Gefahrenpotentiale bewertet wird. Dies lässt eine umfangreichere Bewertung der Situation zu. Es gibt Gefahrenpotentiale, die unabhängig von der Aktuatorik die Situation bewerten. So kann gibt es beispielsweise ein Gefahrenpotential, das den längsdynamischen Fahrzustand bewertet. Entsprechend gibt es ein allgemeingültiges Gefahrenpotential, das den querdynamischen Fahrzustand beschreibt.

Im Gegensatz zu diesen allgemeingültigen Gefahrenpotentialen gibt es auf bestimmte Aktuatoren zugeschnittene spezielle Gefahrenpotentiale. Diese Gefahrenpotentiale tragen der Tatsache Rechnung, dass unterschiedliche Aktuatoren auch unterschiedliche Aktivierungszeiten haben. Das bedeutet, dass die selbe Situation für einen Aktuator mit langer Aktivierungszeit vergleichsweise kritischer ist als für einen mit kurzer. Es gibt zwei unterschiedliche Gruppen von Gefahrenpotentialen:

1. aktuatorunabhängige, allgemeingültige Gefahrenpotentiale
2. aktuatorabhängige, spezielle Gefahrenpotentiale

5.1.1 Beschreibung der Gefahrenpotentiale

Das Gefahrenpotential ist eine dimensionslose Größe im Bereich zwischen 0 und 100. Es beschreibt die Gefahr einer bestimmten Situation. Dabei bedeutet ein Gefahrenpotential von 0 keine Gefahr und eines von 100 sehr große Gefahr. Ein Gefahrenpotential von 100 bedeutet nicht, dass es zwangsläufig zu einem Unfall kommt. Wann das Gefahrenpotential die Werte 0 bzw. 100 erreicht ist nicht allgemeingültig definiert und deshalb individuell für den Anwendungsfall definierbar. Abhängig von den im Steuersystem definierten Gefahrenpotentialen werden die Aktuatoren (z.B. Bremse, rev. Gurtstraffer, Sitzverstellung, etc.) angesteuert.

Dabei werden einzelne Gefahrenpotentiale kombiniert und zur Ansteuerung eines Aktuators verwendet.

Die Aktivierung und der Grad dieser Aktivierung wird durch eine Schwellwertabfrage des Gefahrenpotentials bzw. der Gefahrenpotentiale gewährleistet.

5.1.2 aktuatorunabhängige, allgemeingültige Gefahrenpotentiale

5.1.2.1 längsdynamisches Gefahrenpotential, abhängig von Umfeldsensorinformationen aus dem Umfeldsensorsystem 12(dp_xdyn_sen)

Die Bewertung der längsdynamischen Fahrsituation wird über ein längsdynamisches Gefahrenpotential realisiert unter der Bedingung, dass die Geschwindigkeit größer als eine Mindestgeschwindigkeit
ist. Dies wird mit einem Fuzzy-Inferenz-System realisiert. Fuzzy-Logik ermöglicht es, menschliche Verhaltensweisen oder menschliches Kausalwissen zu mathematisieren und damit durch Rechner imitierbar zu machen. Danach wird die Verkehrssituaton und der Fahrzustand mit Hilfe von Zugehörigkeitsfunktionen klassifiziert. So wird als erste Eingangsgröße die Differenz zwischen Soll- und Istabstand bezogen auf den Sollabstand sx_rel_des bewertet.

$$\frac{sx\_rel\_des - sx\_rel}{sx\_rel\_des} \qquad\qquad (5.1)$$

Der Sollabstand hängt dabei funktional von der eigenen Fahrgeschwindigkeit vx ab und wird nach der Beziehung

$$sx\_rel\_des = sx\_rel\_desmin + t\_ttc\_des * vx \qquad (5.2)$$

mit

sx_rel_des =        Sollabstand
sx_rel_desmin =    Mindestsollabstand
t_ttc_des =         Zeit bis zum Unfall
vx =               Fahrgeschwindigkeit in Längsrichtung

ermittelt.

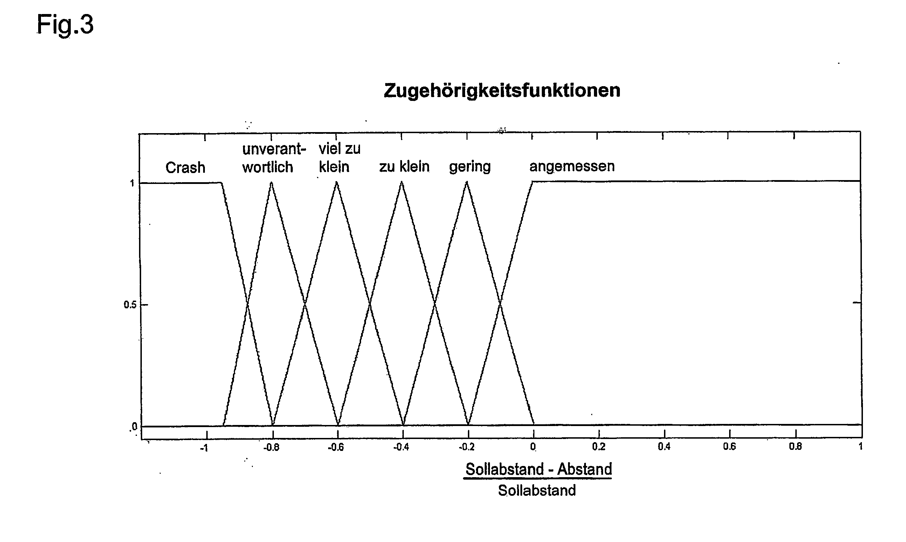

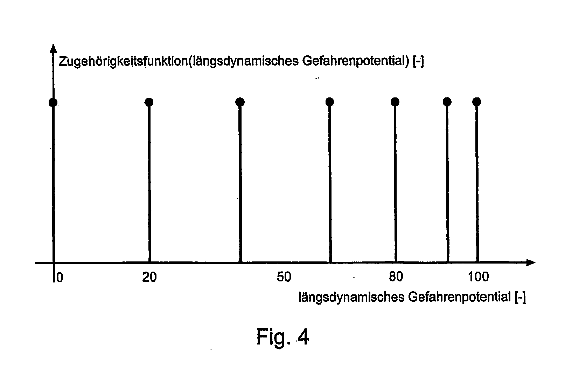

Die Relativgeschwindigkeit als zweite Eingangsgröße wird ebenso durch entsprechende Zugehörigkeitsfunktionen kategorisiert. Die Ausgangsgröße - also das längsdynamische Gefahrenpotential - wird ebenso mit Hilfe von Zugehörigkeitsfunktionen (zweckmäßigerweise werden Singletons (Fig. 4) verwendet) kategorisiert. Figur 3 zeigt die Zugehörigkeitsfunktionen für die erste Eingangsgröße, d.h. für die Differenz zwischen Soll- und Istabstand sx_rel bezogen auf den Sollabstand sx_rel_des. Diese Eingangsgröße wird mit Hilfe von sechs Zugehörigkeitsfunktionen klassifiziert.

Diese so bewerteten Eingangsgrößen werden mit Hilfe von einfach formulierbaren logischen Verknüpfungen, "wenn..., dann..."

Beziehungen (Regeln) ausgewertet und ergeben dann für jede einzelne Regel, je nach Erfüllungsgrad einen Anteil am gesamten Gefahrenpotential. Das resultierende Gefahrenpotential ergibt sich aus der Akkumulation der einzelnen Teilimplikationen.

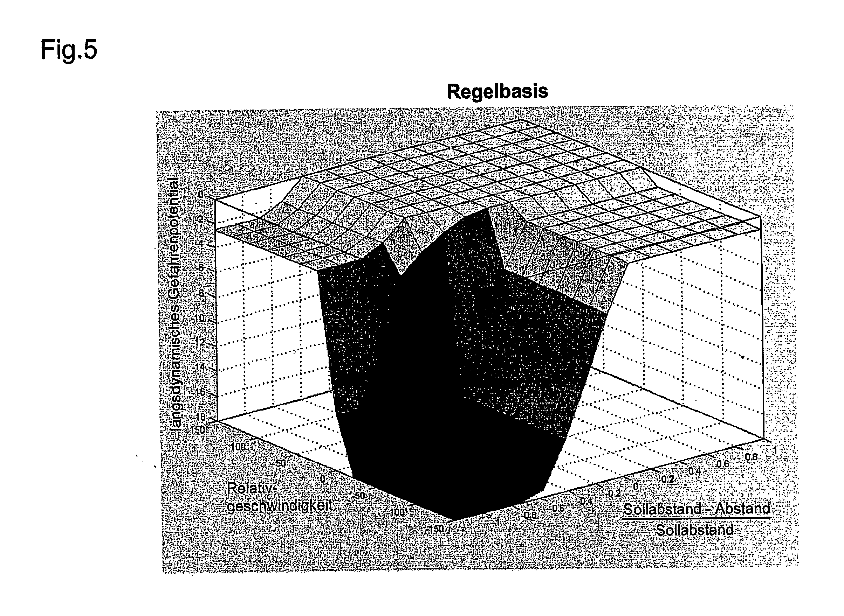

Figur 5 zeigt beispielhaft die Regelbasis, die sich aufgrund der Auswertung des Fuzzy-Systems ergibt. Aufgetragen ist das längsdynamische Gefahrenpotential als Funktion der Eingangsgrößen Relativgeschwindigkeit und der Differenz zwischen Soll- und Istabstand bezogen auf den Sollabstand.

5.1.2.2 längsdynamisches Gefahrenpotential, abhängig von Umfeldsensorinformationen (dp_xdyn_sen_1)

Die Bewertung der längsdynamischen Fahrsituation wird über ein weiteres längsdynamisches Gefahrenpotential realisiert. Diese Gefahrenpotential wird wie folgt berechnet:

1. Bedingung: Die Fahrzeuggeschwindigkeit muss größer einem Schwellenwert sein (im Rangierbetrieb wird kein Gefahrenpotential berechnet)
2. Bedingung: Die Relativgeschwindigkeit zum detektierten Objekt muss kleiner als eine negative Schwelle sein.

Dieses Gefahrenpotential setzt die Verzögerung die notwendig ist um eine Kollision zu verhindern in Relation zu einem Anteil der maximal auf die Straße übertragbare Verzögerung. Die Berechnungsvorschrift lautet:

$$dp\_xdyn\_sen\_1 = \min\left(100\left(\frac{a_{nec}}{-a * \mu_{max} * g} * 100\right)\right) \qquad (5.3)$$

mit beispielsweise $\alpha = 0.4$.

5.1.2.3 längsdynamisches Gefahrenpotential, abhängig von Fahrdynamikinformationen der ABS Funktion (dp_xdyn_abs)

Dieses Gefahrenpotential ist 0 solange keine ABS Bremsung stattfindet. Wird hingegen eine ABS Bremsung ausgeführt ist dieses Gefahrenpotential 100.

$$dp\_xdyn\_abs = \begin{cases} 100 \text{ für ABS Bremsung aktiv}, \\ 0 \text{ für ABS Bremsung inaktiv} \end{cases} \qquad (5.4)$$

5.1.2.4 längsdynamisches Gefahrenpotential, abhängig von Fahrdynamikinformationen der Bremsassistenten-Funktion (dp_xdyn_hba)

Dieses Gefahrenpotential ist 0 solange keine Bremsung mit Bremsassistentenunterstützung (klassischer Hydraulischer Bremsassistent HBA, nicht der Erweiterte Bremsassistent BA+) stattfindet. Wird hingegen eine Bremsung mit Bremsassistentenunterstützung ausgeführt ist dieses Gefahrenpotential 100.

$$dp\_xdyn\_hba = \begin{cases} 100 \text{ für Bremsung mit HBA Unterstützung} \\ 0 \text{ für Bremsung ohne HBA Unterstützung oder keine Bremsung} \end{cases} \qquad (5.5)$$

5.1.2.5 querdynamisches Gefahrenpotential, abhängig von Fahrdynamikinformationen der ESPFunktion (dp_ydyn_esp)

Dieses Gefahrenpotential ist 0 solange kein ESP Eingriff stattfindet. Greift hingegen das ESP in die Fahrdynamik ein, ist dieses Gefahrenpotential 100.

$$dp\_xdyn\_esp = \begin{cases} 100 \text{ für ESP Eingriffe aktiv} \\ 0 \ \text{ für ESP Eingriffe inaktiv} \end{cases} \tag{5.6}$$

Diese Definition ist nur eine erstes Ausführungsbeisopiel. Benutzt man nicht das ESP on/off Flag, sondern die Information über das Zusatzmoment m_add_esp bezogen auf ein Maximum bei bestimmten Reibwertbedingungen, das aufgebracht werden muss, um das Fahrzeug wieder zu stabilisieren, wird eine feinere Abstufung dieses Gefahrenpotentials erzielt.

5.1.2.5 aktuatorabhängige, spezielle Gefahrenpotentiale spezielles Gefahrenpotential zur Ansteuerung des reversiblen Gurtstraffer, abhängig von Umfeldsensorinformationen (dp_msb_sen)

Dieses Gefahrenpotential wird wie folgt berechnet:

1. Bedingung: Die Fahrzeuggeschwindigkeit muss größer einem Schwellwert sein (im Rangierbetrieb wird kein Gefahrenpotential berechnet)
2. Bedingung: Die Relativgeschwindigkeit zum detektierten Objekt muss negativ sein.

Die eigentliche Berechnung des Gefahrenpotentials bildet den Quotienten aus aktuell bestimmter Time to Collision ttc aus den Sensorinformationen und der mittleren Aktivierungszeit des reversiblen Gurtstraffers.
Dieser Quotient gibt an wie viel Zeit noch bleibt, um den Aktuator im Mittel vollständig zu aktivieren. Die Berechungsvorschrift lautet:

$$dp\_msb\_sen = 100 * \min\left(1, \max\left\{1, \left(2 - \frac{t_{ttc}}{t_{msb\ activate}}\right)\right\}\right) \tag{5.7}$$

Als Erweiterung dieser Beziehung kann vorgesehen werden, dass das oben berechnete Gefahrenpotential in Abhängigkeit des Quotienten aus notwendiger Verzögerung und maximal auf die Straße übertragbarer Verzögerung auf einen bestimmten Wert begrenzt wird. Dies bewertet die Möglichkeit des Fahrers vor dem Unfall noch zu bremsen, also die Zustandsgrößen Geschwindigkeit und Beschleunigung zu verändern. Diese konstanten Zustandsgrößen werden bei der Berechnung der Time to Collision, so wie oben benutzt, vorausgesetzt.
Weiterhin kann vorgesehen werden, das Gefahrenpotential in Abhängigkeit des Quotienten aus Zeit um einen bestimmten Querversatz zu realisieren und Time to Collision auf einen bestimmten Wert zu begrenzen. Dies bewertet die Möglichkeit des Fahrers dem Hindernis auszuweichen. Die Ergänzung um die oben beschriebenen Einweiterungen führen zu einer realistischeren Bewertung der eigentlichen Gefahr, da die Beeinflussungsmöglichkeiten auf die aktuelle Fahrsituation des Fahrers berücksichtigt werden.

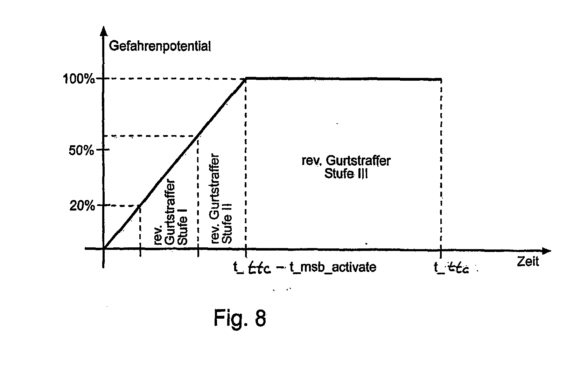

Figur 8 zeigt hierbei die stufenweise Aktivierung eines Gurtstraffers in Abhängigkeit von dem Gefahrenpotential, z.B. 20%, 60% und 100%. Bei 20% des Gefahrenpotentials wird die Stufe I des Gurtstraffers aktiviert, bei 60 % Stufe II und bei 100 % Stufe III. Bei Stufe I wird die Gurtlose entfernt, bei Stufe II wird der Gurtstraffer vorgespannt und verriegelt, bei Stufe III wird der Insasse positioniert, d.h. der Gurtstraffer mit maximaler Kraft gespannt und verriegelt.
Der aktivierte Gurtstraffer verbleibt in seiner aktivierten Stufe bis das Gefahrenpotential unterhalb einer Schwelle liegt, die keine Gefahr mehr darstellt und die resultierende Fahrzeugbeschleunigung unterhalb einer Schwelle liegt und eine bestimmte Zeitdauer vergangen ist.

5.1.2.6 spezielles Gefahrenpotential zur Ansteuerung der Sitzverstellung, abhängig von Umfeldsensorinformationen (dp_seat_sen)

Dieses Gefahrenpotential wird nach der gleichen Berechnungsvorschrift wie das Gefahrenpotential dp_msb_ sen berechnet. Für die Aktivierungszeit des Aktuators wird nun lediglich die mittlere Aktivierungszeit angesetzt (statt tmsb_activate setze tseat_activate), die zur Verstellung des Sitzes notwendig ist. Die Ergänzungen wie bei der Berechnung des Gefahrenpotentials dp_msb_sen beschrieben können auch hier gelten.

5.1.2.7 spezielles Gefahrenpotential zur Ansteuerung der Fenster- und/oder Schiebedachverstellung, abhängig von Umfeldsensorinformationen (dp_wind_sen/dp_roof_sen)

Dieses Gefahrenpotential wird nach der gleichen Berechnungsvorschrift wie das Gefahrenpotential dp_msb_ sen berechnet. Für die Aktivierungszeit des Aktuators wird nun lediglich die mittlere Aktivierungszeit angesetzt (statt tmsb activate setze twind_activate bzw. troof_activate), die zur Schließung des Fensters bzw. Schiebedaches notwendig ist. Die Ergänzungen wie bei der Berechnung des Gefahrenpotentials dp_msb_sen beschrieben können auch hier gelten.

Der Vorteil der Erfindung besteht darin, dass Einflussgrößen getrennt voneinander berechnet, bewertet und kategorisiert werden können. Mittels der verschiedenen Gefahrenpotentiale kann das Gesamtbild der aktuellen Gefahrensituation durch einfache Einzelzusammenhänge beschrieben werden. Das Gesamtbild der aktuellen Gefahrensituation ergibt aus der Auswertung der Einzelgefahrenpotentiale.

Die Zuverlässigkeit der verwendeten Daten zur Ermittlung der oben genannten Stelleingriffe und die Komplexität der Situation lassen bei fahrdynamischen Eingriffen in das Fahrzeug keine völlig autonomen Eingriffe zu. Daher können die aus dem Gefahrenrechner ermittelten Stelleingriffe nur nach einer Bewertung in der Arbitriereinheit 28 (Fig. 2) mit dem in dem Fahrerwunschmodul 29 (Fig.2) ermittelten Fahrerwunsch, wie der Fahreraktion und anderer die aktuelle Fahrersituation beschreibende Größen zu einem jeweils passenden Grad realisiert werden.

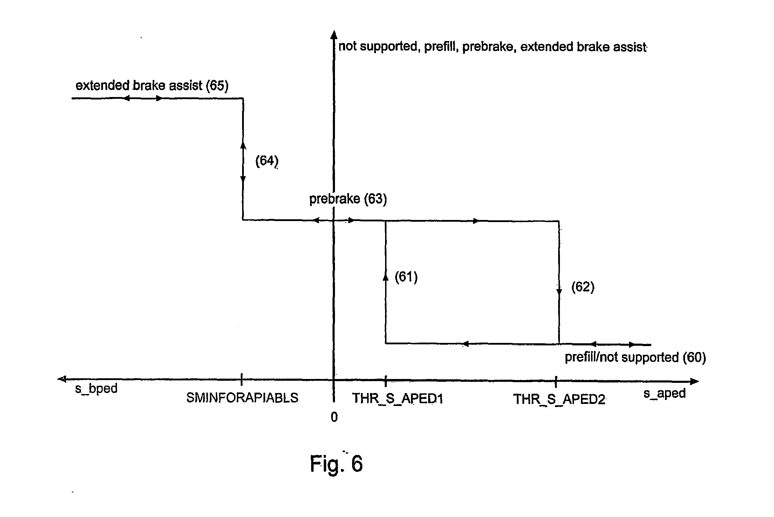

Hierzu nutzt ein Zustandsautomat die vom Fahrerwunschmodul zur Verfügung gestellten Kenngrößen und schaltet davon abhängig z.B. Verzögerungsvorgaben des Gefahrenrechners 10 frei. Ausgewertet wird im wesentlichen die Fußbewegung des Fahrers. Diese lässt Rückschlüsse darüber zu, als wie gefährlich der Fahrer die gleiche Situation einschätzt bzw. ob er überhaupt eine kritische Situation erkannt hat. Erst wenn der Fahrer diese kritische Situation bestätigt, wird Fahrer unabhängig Bremsdruck aufgebaut. Wie Figur 6 zeigt, werden dabei vier Stufen unterschieden:

1. **not supported:** Der Fahrer zeigt durch einen positiven zeitlichen Gradienten auf dem Gaspedal (s_aped= Gaspedalweg) an, beschleunigen zu wollen. Auch wenn der Gefahrenrechner eine kritische Situation detektiert, wird in diesem Zustand kein Bremsdruck autonom aufgebaut pmax = 0bar.

2. **prefill:** Dieses Niveau definiert einen Zustand bei dem der Verzögerungswunsch des Fahrers nur eingeschränkt bestimmt werden kann oder noch nicht vorhanden ist. In diesem Zustand muss der Fahrer das Gaspedal s_aped berühren. Es gibt zwei unterlagerte Zustände:

a) **prefill 1:** Das berechnete Gefahrenpotential hat einen zeitlichen Gradienten der oberhalb der definierten Schwelle liegt. Der Fahrer verändert seine Gaspedalstellung s_aped nicht. Diese Situation wird interpretiert als extreme Verschärfung der Gefahrensituation, so dass auch ohne aktive Bestätigung des Fahrers ein Bremsdruck von maximal p1max = k1 bar zugelassen wird. Dies führt zu einem Anlegen der Bremsbeläge.

b) **prefill 2:** Bestätigt der Fahrer die kritische Situation indem er das Gaspedal verlässt (negativer zeitlicher Gradient auf dem Gaspedal) wird ein maximaler Bremsdruck von p2max > P1max zugelassen.

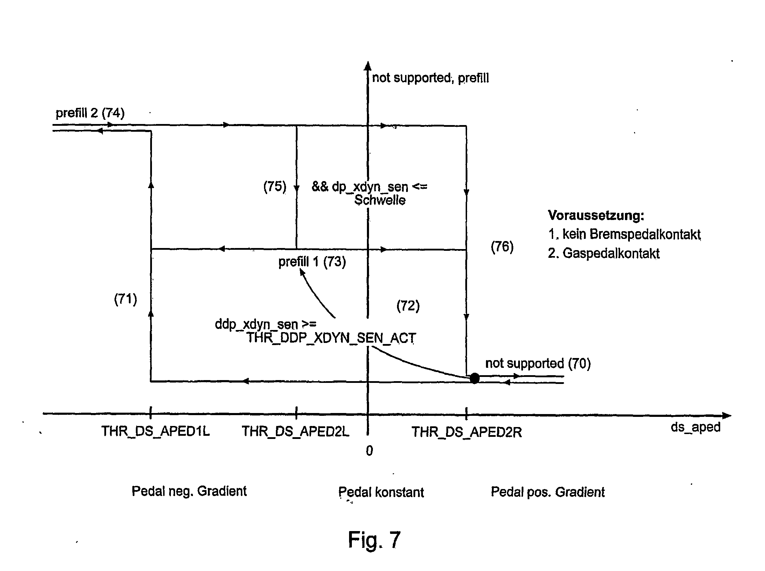

Die Übergänge von prefill 1 zu prefill 2 sind in Figur 7 näher dargestellt.

3. **prebrake:** In diesem Zustand hat der Fahrer weder Gas- noch Bremspedal betätigt. Deshalb wird dieser Zustand O als eingeschränkter Verzögerungswunsch interpretiert. Die maximale Verzögerung wird somit auf ungefähr das ACC-Niveau angehoben (0.3g), so dass ein maximaler Bremsdruck von p3max > p2max zustande kommen kann.

4. **extended brake assist:** Mit dem Übergang in diesen Zustand bestätigt der Fahrer seinen Verzögerungswunsch indem er das Bremspedal (Schwelle: Bremslichtschalter BLS)betätigt. Sind nun noch weitere Bedingungen erfüllt, wird abhängig vom Grad dieser Erfüllung der vom Gefahrenrechner vorgegebene Bremsdruck freigeschaltet.

Diese Bedingungen gliedern sich wie folgt:

Aus

a) dem zeitlichen Verlauf des Bremsdrucks und der Bremslichtinformation und
b) dem zeitlichen Verlauf des Gefahrenpotentials wird eine Notsituation abgeleitet. Wird diese erkannt, wird der vom Gefahrenrechner berechnete Bremsdruck vollständig als Sollwert an die Bremsanlage weitergeleitet. Der Fahrer erhält maximale Unterstützung. Wird hingegen keine Notsituation erkannt wird eine Kennzahl ermittelt, die den Grad des Bremswunsches des Fahrers repräsentiert. Dieser Faktor besteht aus drei Anteilen, die in einem bestimmten Gewichtungsverhältnis eingehen.

a) Verhältnis von Bremspedalweg zum Maximum des Bremspedalweges, der abhängig vom Druck in der Anlage ist (repräsentiert durch den Radbremsdruck). Dies ist notwendig, da der Fahrer den Bremsdruck in der Anlage spürt, falls diese vorgefüllt sein sollte.

b) Verhältnis von Bremspedalgeschwindigkeit zum Maximum der Bremspedalgeschwindigkeit. Dieses Maximum ist näherungsweise unabhängig vom Grad der Anlagenvorfüllung.

c) Faktor der die Umsetzzeit vom Gas- auf des Bremspedal bewertet.

Der Fahrer erhält in diesem Zustand durch Freischaltung des Bremsdruckes der im Gefahrenrechner ermittelt wird, eine an die Situation angepasste Bremsunterstützung.

Wie Figur 6 zeigt, ist die Verzögerungsunterstützung des Fahrers von dem Fahrpedalweg s_aped und dem Bremspedalweg s_bped abhängig. In Pfeilrichtung der jeweiligen Achsen s_aped und s_bped wird eine Zunahme der positiven oder negativen Beschleunigung des Fahrzeugs angenommen. Befindet sich der Fahrer in dem Zustand prefill/not supported 60, dann kann die Arbitriereinheit keinen Bremsdruck, einen Bremsdruck, der zum Anlegen der Bremsbelege führt oder einen Bremsdruck, der zum leichten Verzögen des Fahrzeugs führt, freischalten. Verlässt der Fahrer das Fahrpedal und unterschreitet die Schwelle THR_S_APED1 zeigt er dadurch den Wunsch an, das Fahrzeug zu verzögern und der Zustand wechselt über den Pfad 61 nach prebrake 63. Betätigt der Fahrer im Zustand prebrake das Fahrpedal muss die Schwelle THR_S_APED2 überwunden werden, damit der Zustand über den Pfad 62 nach prefill/not supported 60 wechselt. Befindet sich das System im Zustand prebrake 63 und der Fahrer betätigt das Bremspedal bis eine Schwelle SMINFORAPIABLS überschritten wird, dann wechselt der Zustand prebrake über Pfad 64 in den Zustand extended brake assist 65.

Figur 7 stellt die Übergänge zwischen den Zuständen not supported, prefill 1 und prefill 2 dar. ds_aped bezeichnet dabei die Gaspedalgeschwindigkeit. In Figur 7 wird dabei in Pfeilrichtung verlaufend ab 0 ein positiver Gradient des Gaspedals angenommen, d.h. das Gaspedal wird von dem Fahrer betätigt und das Fahrzeug beschleunigt, ab 0 entgegen der Pfeilrichtung wird ein negativer Gradient angenommen, d.h. der Fahrer nimmt das Gaspedal zurück und das Fahrzeug bremst über den Motor ab. Befindet man sich im Zustand not supported 70 und der Gradient des Gefahrenpotentials ddp_xdy_sen überschreitet den Schwellwert THR_DDP_XDYN_SEN_ACT wechselt man über den Pfad 72 in den Zustand prefill 1 73. Befindet man sich im Zustand not supported 70 und der Fahrer verlässt das Fahrpedal so dass die Schwelle THR_DS_APED1L unterschritten wird, wechselt man über den Pfad 71 in den Zustand prefill 2 74. Ausgehend vom Zustand prefill 2 74 wechselt man über den Pfad 75 unter der Bedingung dass der Gradient des Fahrpedalweges größer als die Schwelle THR_DS_APED2L und das Gefahrenpotential kleiner als eine Schwelle ist, in den Zustand prefill 1 73. Ebenso wird der Zustand prefill2 74 über den Pfad 76 verlassen, wenn der Gradient des Fahrpedalweges größer als die Schwelle THR_DS_APED2R ist.

Der Zustand prefill 1 73 kann über den Pfad 71 in den Zustand prefill 2 74 wechseln, wenn der Gradient des Fahrpedalweges kleiner als die Schwelle THR_DS_APED1L ist.

Der Zustand prefill 1 73 kann über den Pfad 76 in den Zustand not supported 70 wechseln, wenn der Gradient des Fahrpedalweges größer als die Schwelle THR_DS_APED2R ist.

Die Übergangsbedingungen können verfeinert werden, wenn als zusätzliche Eingangsgröße die Fahrzeugbeschleunigung ausgewertet wird. Der Vorteil dieser Erweiterung besteht in einer Betrachtung eines beschleunigten Fahrzustandes über eine längere Zeitspanne, die bei der Auswertung der Betätigung des Fahrpedals nicht zur Verfügung steht. Der Fahrerwunsch kann dadurch besser umgesetzt werden.

Dabei ergeben sich Übergänge, die vorteilhaft ruckminimal gestaltet werden.

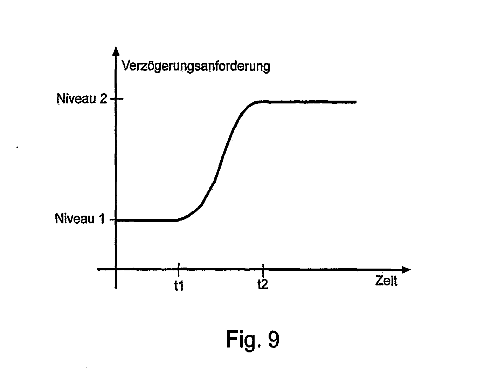

(z.B. Figur 9) Hierbei wird mit einer sigmoidalen Übergangsfunktion das aktuelle Stellniveau in das neue überführt. Als Ausführungsbeispiel kann ein Ausschnitt der Sinusfunktion oder deren Approximation durch eine Reihenentwicklung verwendet werden.

Der Fahrer behält in jeder Situation die Kontrolle und kann zumindest die Bremseingriffe durch Gaspedalbetätigung überstimmen.

## Patentansprüche

1. Elektronisches Steuersystem für ein Fahrzeug,
   mit einem Fahrerwunschwunschmodul (29) zum Ermitteln eines Fahrerwunsches
   mit einem Umfeldsensorsystem (12) zum Ermitteln von Umfelddaten
   mit einem Gefahrenrechner (10) zum Ermitteln einer Gefahrensituation aus den ermittelten Umfelddaten,
   und mit Fahrzeugaktuatoren, die von dem Steuersystem angesteuert werden
   **dadurch gekennzeichnet,**
   **dass** der Gefahrenrechner (10) ein Modell zur Berechnung von die Aktivierungszeit der Fahrzeugaktuatoren und längsdynamische sowie querdynamische Fahrsituationen berücksichtigenden Gefahrenpotentialen aufweist,

**dass** in Abhängigkeit von den Gefahrenpotentialen gestufte Stelleingriffe zur Steuerung der Fahrzeugaktuatoren (11, 13, 15, 16, 17, 18, 19) ermittelt werden,

**dass** in Abhängigkeit von der durch die Stelleingriffe verursachten Beeinflussung der Fahrdynamik des Fahrzeugs eine Bewertung mit dem im Fahrerwunschmodul (29) ermittelten Fahrerwunsch vorgenommen wird, und

**dass** nach Maßgabe des Bewertungsergebnisses die gestuften Stelleingriffe bedingt freigeschaltet, freigeschaltet oder gesperrt werden.

2. Elektronisches Steuersystem nach Anspruch 1, **dadurch gekennzeichnet, dass** im Fahrerwunschmodul (29) zur Ermittlung von Kenngrößen für den Fahrerwunsch aus den Eingangsgrößen Gaspedalweginformation und der Bremslichtinformation die Umsetzbewegung zwischen dem Gas- und dem Bremspedal ermittelt wird.

3. Elektronisches Steuersystem nach Anspruch 2, **dadurch gekennzeichnet, dass** aus den Eingangsgrößen die Umsetzzeit zwischen den Pedalen ermittelt wird.

4. Elektronisches Steuersystem nach einem der Ansprüche 1 bis 3, **dadurch gekennzeichnet, dass** der Fahrerwunschmodul (29) die ermittelten Kenngrößen für den Fahrerwunsch einer nachgeschalteten Arbitriereinheit (28) zur Verfügung stellt.

5. Elektronisches Steuersystem für ein Fahrzeug nach Anspruch 4, **dadurch gekennzeichnet, dass** der Fahrerwunschmodul (29) weitere Kenngrößen über einen Lenkwunsch und/oder Beschleunigungswunsch ermittelt und der nachgeschalteten Arbitriereinheit (28) zur Verfügung stellt.

6. Elektronisches Steuersystem nach einem der Ansprüche 1 bis 5, **dadurch gekennzeichnet, dass** der Gefahrenrechner (10) die Gefahrenpotentiale anhand von Daten, die mindestens die Fahrzeuglängsgeschwindigkeit, die Fahrzeuglängsbeschleunigung, die Fahrzeugquerbeschleunigung, die Abstände zu relevanten Objekten im Nah- und/oder Fernbereich, die Relativgeschwindigkeit zu relevanten Objekten im Nah- und/oder Fernbereich und/oder deren Ableitungen sowie Zustandsinformationen über Fahrdynamikregler, wie ABS, HBA, ESP u.dgl., wiedergeben, berechnet, die mindestens in Abhängigkeit von ermittelten längsdynamischen und/oder querdynamischen Gefahrenkenngrößen die in ihrer Wirkung gestuften, vom ermittelten Gefahrenpotential abhängigen Stellgrößen für die Bremsen, die reversiblen Insassenschutzmittel und die Relativposition zwischen Insassenschutzmitteln und Fahrzeuginsassen verändernden Verstellvorrichtungen erzeugen.

7. Elektronisches Steuersystem nach einem der Ansprüche 1 bis 6, **dadurch gekennzeichnet, dass** die Stelleingriffe für die Aktuatoren (11, 13, 15, 16, 17, 18, 19) insbesondere für die Bremsen (11), situationsangepasst erfolgen.

8. Elektronisches Steuersystem nach einem der Ansprüche 1 bis 7, **dadurch gekennzeichnet, dass** der Gefahrenrechner (10) Gefahrenpotentiale berechnet, die mindestens in Abhängigkeit von ermittelten längsdynamischen und/oder querdynamischen Gefahrenkenngrößen abhängige Stellgrößen für das Schließen von Fahrzeugöffnungen (17) erzeugt.

9. Elektronisches Steuersystem nach einem der Ansprüche 1 bis 8, **dadurch gekennzeichnet, dass** der Gefahrenrechner (10) weiterhin in Abhängigkeit von dem ermittelten Gefahrenpotential optische und/oder haptische Warn- und/oder Führungshinweise zum Warnen und/oder Leiten des Fahrers zu einer der aktuellen Fahrzeugsituation angepassten Fahrerreaktion erzeugt und diese Warn- und/oder Führungshinweise direkt der Aktuatorik (13, 18, 16) zur Umsetzung weitergibt.

10. Elektronisches Steuersystem nach Anspruch 9, **dadurch gekennzeichnet, dass** die Warnhinweise mittels eines vibrierenden Pedals (16) und/oder Sitzes (13) und/oder einer Anzeige (18) erfolgen.

11. Elektronisches Steuersystem nach einem der Ansprüche 9 bis 10, **dadurch gekennzeichnet, dass** die Führungshinweise mittels einer veränderten Bedienkraft an mindestens einem Pedal (16) oder der Lenkhandhabe erfolgen.

12. Elektronisches Steuersystem nach einem der Ansprüche 1 bis 11, **dadurch gekennzeichnet, dass** der Gefahrenrechner (10) Gefahrenpotentiale berechnet, die mindestens in Abhängigkeit von ermittelten längsdynamischen und/oder querdynamischen Gefahrenkenngrößen Informationen für die nicht reversiblen Insassenschutzmittel (15) erzeugt und den Steuerungen der nicht reversiblen Insassenschutzmittel zur Verfügung stellt.

13. Elektronisches Steuersystem nach einem der Ansprüche 1 bis 12, **dadurch gekennzeichnet, dass** die Arbitriereinheit (28) einen Zustandsautomaten aufweist, der die vom Fahrerwunschmodul (29) zur Verfügung gestellten Kenngrößen, wie den Bremspedalweg, die Bremspedalgeschwindigkeit und/oder den Gaspedalweg, die Gaspedalgeschwindigkeit und die Umsetzzeit zwischen Gas- und Bremspedal und/oder den Zustand (An/Aus) des Bremslichts und/oder gemessene und berechnete Bremsdrücke der Bremsanlage und/oder deren Ableitungen und/oder die Beschleunigung des Fahrzeugs und/oder die vom Gefahrenrechner (10) ermittelten Gefahrenpotentiale und/ oder deren Ableitungen, gegen die vom Gefahrenrechner (10) ermittelten Stelleingriffe arbitriert.

14. Elektronisches Steuersystem nach einem der Ansprüche 1 bis 13, **dadurch gekennzeichnet, dass** die Korrelation der Kenngrößen des Fahrerwunschmoduls (28) mit den Stelleingriffen des Gefahrenrechners (10) bewertet wird und in Abhängigkeit von dem Bewertungsergebnis die Stelleingriffe an die Aktuatorik bedingt freigeschaltet, freigeschaltet oder gesperrt wird.

15. Elektronisches Steuersystem nach Anspruch 1 bis 14, **dadurch gekennzeichnet, dass** der Wert der Stelleingriffe in Abhängigkeit von dem Bewertungsergebnis modifiziert wird.

16. Elektronisches Steuersystem nach einem der Ansprüche 1 bis 15, **dadurch gekennzeichnet, dass** der Gefahrenrechner (10) verschiedene Gefahrenpotentiale ermittelt und zur Bildung der Stelleingriffe kombiniert.

17. Elektronisches Steuersystem nach einem der Ansprüche 1 bis 16, **dadurch gekennzeichnet, dass** ein Gefahrenpotential aus einem Fuzzy-System berechnet wird und/oder in einem fahrdynamischen Modell berechnet wird.

18. Elektronisches Steuersystem nach einem der Ansprüche 1 bis 17, **dadurch gekennzeichnet, dass** der Gefahrenrechner (10) allgemeine Gefahrenpotentiale und spezielle Gefahrenpotentiale ermittelt, wobei die allgemeinen Gefahrenpotentiale aktuatorunabhängig und die speziellen Gefahrenpotentiale aktuatorabhängig sind.

19. Elektronisches Steuersystem nach Anspruch 1, 4, 11 bis 17, **dadurch gekennzeichnet, dass** die Arbitriereinheit (28) einen Zustandsautomaten aufweist, der die vom Fahrerwunschmodul (29) zur Verfügung gestellten Kenngrößen, wie den Bremspedalweg, die Bremspedalgeschwindigkeit und/oder den Gaspedalweg, die Gaspedalgeschwindigkeit und die Umsetzzeit zwischen Gas- und Bremspedal und/oder den Zustand (An/Aus) des Bremslichts und/ oder gemessene und berechnete Bremsdrücke der Bremsanlage und/oder deren Ableitungen und/oder die Beschleunigung des Fahrzeugs und/oder die vom Gefahrenrechner ermittelten Gefahrenpotentiale und/oder deren Ableitungen, gegen die vom Gefahrenrechner ermittelten Bremseingriffe arbitriert.

20. Elektronisches Steuersystem nach Anspruch 19, **dadurch gekennzeichnet, dass** ein Bremseneingriff in Abhängigkeit von den Kenngrößen Gaspedalweg, Bremspedalweg und/oder Bremsdrücke und/oder Beschleunigung und/ oder deren Ableitungen und/oder einer Bremslichtinformation des den Fahrerwunsch repräsentierenden Fahrerwunschmoduls bestimmt wird und nach Maßgabe von Schwellenwerten dieser Kenngrößen und der Gefahrenpotentiale Niveaus für maximale Verzögerungen abgeleitet werden.

21. Elektronisches Steuersystem nach Anspruch 20, **dadurch gekennzeichnet, dass** der Grad des Bremswunsches des Fahrers durch eine Kennzahl bestimmt wird, die in Abhängigkeit von der Gewichtung der folgenden Bedingungen

a.)Verhältnis vom Bremspedalweg zum Maximum des Bremspedalwegs,
b.)Verhältnis von Bremspedalgeschwindigkeit zum Maximum der Bremspedalgeschwindigkeit,
c.)Faktor der die Umsetzzeit von Gas- auf Bremspedal bewertet,

ermittelt wird.

22. Elektronisches Steuersystem nach Anspruch 20, **dadurch gekennzeichnet, dass** der Grad des Bremswunsches des Fahrers durch eine Kennzahl bestimmt wird, die in Abhängigkeit von der Gewichtung der folgenden Bedingungen

a.)Verhältnis eines Fahrerwunschbremsdruck zum durchschnittlichen Maximum eines Notbremsdrucks,
b.)Verhältnis des zeitlichen Gradienten des Fahrerwunschbremsdrucks zum durchschnittlichen zeitlichen Gradienten eines Maximums eines Notbremsdrucks,
c.)Faktor der die Umsetzzeit von Gas- auf Bremspedal bewertet,

ermittelt wird.

**23.** Elektronisches Steuersystem nach Anspruch 20 oder 21,
**dadurch gekennzeichnet, dass** aus dem zeitlichen Verlauf des Bremsdrucks und der Bremslichtinformation und dem zeitlichen Verlauf des Gefahrenpotentials eine Notbremssituation abgeleitet wird.

**24.** Elektronisches Steuersystem nach Anspruch 23, **dadurch gekennzeichnet, dass** bei erkannter Notbremssituation, die vom Gefahrenrechner (10) berechnete Verzögerung vollständig als Sollwert an die Bremsaktuatoren (11) weitergeleitet wird.

**25.** Elektronisches Steuersystem nach einem der Ansprüche 1 bis 24, **dadurch gekennzeichnet, dass** eine Abitriereinheit mit dem Gefahrenrechner (10) und dem Fahrerwunschmodul (29) verbunden ist und vom Fahrerwunschmodul (29) zur Verfügung gestellten Kenngrößen gegen die vom Gefahrenrechner (10) ermittelten Stelleingriffe arbitriert.

**26.** Elektronisches Steuersystem nach einem der Ansprüche 1 bis 25 , **gekennzeichnet durch** ein Modell zur Berechnung von aktuatorspezifischen und aktuatorunspezifischen Gefahrenpotentialen aus Größen, die von Einrichtungen des Fahrzeugs berechnet oder gemessen werden.

**27.** Elektronisches Steuersystem nach Anspruch 26, **dadurch gekennzeichnet, dass** die Einrichtungen des Fahrzeugs Fern- und/oder Nahbereichssensoren, Fahrdynamiksensoren, Wegsensoren, Drucksensoren, Fahrzeugmodelle und/oder hydraulische Modelle sind.

**28.** Verfahren zum Ermitteln mindestens eines vom Fahrer unabhängigen Eingriffs in ein Fahrzeugsystem, bei dem in einem Fahrerwunschwunschmodul (29) ein Fahrerwunsch ermittelt wird,
bei dem ferner mit einem Umfeldsensorsystem (12) Umfelddaten ermittelt werden, und bei dem
mit einem Gefahrenrechner (10) eine Gefahrensituation aus den ermittelten Umfelddaten ermittelt wird,
und mit Fahrzeugaktuatoren, die bei ermitteltem Eingriff angesteuert werden
**dadurch gekennzeichnet,**
**dass** der Gefahrenrechner (10) ein Modell zur Berechnung von die Aktivierungszeit der Fahrzeugaktuatoren (11, 13, 15, 16, 17, 18, 19) und längsdynamische sowie querdynamische Fahrsituationen berücksichtigenden Gefahrenpotentialen aufweist,
**dass** in Abhängigkeit von den Gefahrenpotentialen gestufte Stelleingriffe zur Steuerung der Fahrzeugaktuatoren (11, 13, 15, 16, 17, 18, 19) ermittelt werden,
**dass** in Abhängigkeit von der durch die Stelleingriffe verursachten Beeinflussung der Fahrdynamik des Fahrzeugs eine Bewertung mit dem im Fahrerwunschmodul (29) ermittelten Fahrerwunsch vorgenommen wird, und
**dass** nach Maßgabe des Bewertungsergebnisses die gestuften Stelleingriffe bedingt freigeschaltet, freigeschaltet oder gesperrt werden.

**29.** Verfahren nach Anspruch 28, **dadurch gekennzeichnet, dass** die Gefahrenpotentiale aktuatorunabhängig und aktuatorabhängig in einem Modell ermittelt werden.

**Claims**

**1.** Electronic control system for a vehicle,
with a driver intention module (29) for determining an intention of a driver,
with a surroundings sensor system (12) for determining surroundings data,
with a danger calculator (10) for determining a dangerous situation from the determined surroundings data, and
with vehicle actuators driven by the control system,
**characterized in**
**that** the danger calculator (10) has a model for the calculation of danger potentials that take the activation time of the vehicle actuators and longitudinal-dynamics and lateral-dynamics driving situations into consideration,
**that** graduated control interventions for the control of the vehicle actuators (11, 13, 15, 16, 17, 18, 19) are determined in dependence on the danger potentials,
**that** an assessment with the driver's intention determined in the driver intention module (29) is made in dependence on the influencing of the vehicle movement dynamics of the vehicle, said influencing being caused by the control interventions, and
**that** the graduated control interventions are enabled conditionally, are enabled or are disabled according to the result of the assessment.

**2.** Electronic control system according to claim 1, **characterized in that** for determining parameters for the driver's intention, the change-over movement between the accelerator pedal and the brake pedal is determined from the input quantities "accelerator pedal travel information" and "stop light information" in the driver intention module (29).

**3.** Electronic control system according to claim 2, **characterized in that** the change-over time between the pedals is determined from the input quantities.

**4.** Electronic control system according to any one of claims 1 to 3, **characterized in that** the driver intention module (29) supplies the determined parameters for the driver's intention to a downstream arbitration unit (28).

**5.** Electronic control system for a vehicle according to claim 4, **characterized in that** the driver intention module (29) determines further parameters for a steering intention and/or an acceleration intention and supplies them to the downstream arbitration unit (28).

**6.** Electronic control system according to any one of claims 1 to 5, **characterized in that** the danger calculator (10) calculates the danger potentials on the basis of data representing at least the longitudinal velocity of the vehicle, the longitudinal acceleration of the vehicle, the lateral acceleration of the vehicle, the distances to nearby and/or remote relevant objects, the velocity relative to nearby and/or remote relevant objects and/or the derivations thereof as well as information on the state of vehicle-movement-dynamics controllers, such as ABS, HBA, ESC and the like, that generate, at least in dependence on determined longitudinal-dynamics and/or lateral-dynamics danger parameters, the correcting variables for the brakes, for the reversible passenger protection means and for adjustment devices changing the relative position between passenger protection means and vehicle passengers, said correcting variables being graduated with respect to their effect and being dependent on the determined danger potential.

**7.** Electronic control system according to any one of claims 1 to 6, **characterized in that** the control interventions for the actuators (11, 13, 15, 16, 17, 18, 19), particularly for the brakes (11), take place in such a manner that they are adapted to the particular situation.

**8.** Electronic control system according to any one of claims 1 to 7, **characterized in that** the danger calculator (10) calculates danger potentials that generate, at least in dependence on determined longitudinal-dynamics and/or lateral-dynamics danger parameters, dependent correcting variables for the closing of vehicle openings (17).

**9.** Electronic control system according to any one of claims 1 to 8, **characterized in that** the danger calculator (10) furthermore generates, in dependence on the determined danger potential, optical and/or haptic warnings and/or guidance information for warning and/or guiding the driver in order to make him or her adapt his or her reaction to the current vehicle situation and directly forwards said warnings and/or guidance information to the actuators (13, 18, 16) for implementation.

**10.** Electronic control system according to claim 9, **characterized in that** the driver is warned by means of a vibrating pedal (16) and/or seat (13) and/or by means of a display (18).

**11.** Electronic control system according to any one of claims 9 to 10, **characterized in that** the guidance information is given by means of a changed operating force at at least one pedal (16) or at the steering wheel.

**12.** Electronic control system according to any one of claims 1 to 11, **characterized in that** the danger calculator (10) calculates danger potentials, that generate, at least in dependence on determined longitudinal-dynamics and/or lateral-dynamics danger parameters, information for the non-reversible passenger protection means (15) and supply it to the control systems of the non-reversible passenger protection means.

**13.** Electronic control system according to any one of claims 1 to 12, **characterized in that** the arbitration unit (28) has a state machine that arbitrates the parameters supplied by the driver intention module (29), such as the brake pedal travel, the brake pedal velocity and/or the accelerator pedal travel, the accelerator pedal velocity and the change-over time between the accelerator pedal and the brake pedal and/or the state (ON/OFF) of the stop light and/or measured and calculated brake pressures of the brake system and/or the derivations thereof and/or the acceleration of the vehicle and/or the danger potentials determined by the danger calculator (10) and/or the derivations thereof, against the control interventions determined by the danger calculator (10).

**14.** Electronic control system according to any one of claims 1 to 13, **characterized in that** the correlation of the parameters of the driver intention module (28) with the control interventions of the danger calculator (10) is assessed and the control interventions for the actuators are enabled conditionally, are enabled or are disabled in dependence on the result of the assessment.

15. Electronic control system according to claim 1 to 14, **characterized in that** the value of the control interventions is modified in dependence on the result of the assessment.

16. Electronic control system according to any one of claims 1 to 15, **characterized in that** the danger calculator (10) determines various danger potentials and combines them for forming the control interventions.

17. Electronic control system according to any one of claims 1 to 16, **characterized in that** a danger potential is calculated from a fuzzy system and/or is calculated in a vehicle-movement-dynamics model.

18. Electronic control system according to any one of claims 1 to 17, **characterized in that** the danger calculator (10) determines general danger potentials and special danger potentials, wherein the general danger potentials are actuator-independent and the special danger potentials are actuator-dependent.

19. Electronic control system according to claim 1, 4, 11 to 17, **characterized in that** the arbitration unit (28) has a state machine that arbitrates the parameters supplied by the driver intention module (29), such as the brake pedal travel, the brake pedal velocity and/or the accelerator pedal travel, the accelerator pedal velocity and the change-over time between the accelerator pedal and the brake pedal and/or the state (ON/OFF) of the stop light and/or measured and calculated brake pressures of the brake system and/or the derivations thereof and/or the acceleration of the vehicle and/or the danger potentials determined by the danger calculator and/or the derivations thereof, against the braking interventions determined by the danger calculator.

20. Electronic control system according to claim 19, **characterized in that** a braking intervention is determined in dependence on the parameters "accelerator pedal travel", "brake pedal travel" and/or "brake pressures" and/or "acceleration" and/or the derivations thereof and/or on stop light information of the driver intention module, said module representing the driver's intention, and that levels for maximum decelerations are derived according to threshold values of these parameters and the danger potentials.

21. Electronic control system according to claim 20, **characterized in that** the degree of the driver's braking intention is determined by a characteristic number that is determined in dependence on the weighting of the following conditions:

   a) ratio of the brake pedal travel to the maximum of the brake pedal travel;
   b) ratio of the brake pedal velocity to the maximum of the brake pedal velocity;
   c) factor assessing the change-over time from the accelerator pedal to the brake pedal.

22. Electronic control system according to claim 20, **characterized in that** the degree of the driver's braking intention is determined by a characteristic number that is determined in dependence on the weighting of the following conditions:

   a) ratio of a driver-intention brake pressure to the average maximum of an emergency brake pressure;
   b) ratio of the time gradient of the driver-intention brake pressure to the average time gradient of a maximum of an emergency brake pressure;
   c) factor assessing the change-over time from the accelerator pedal to the brake pedal.

23. Electronic control system according to claim 20 or 21, **characterized in that** an emergency braking situation is derived from the time history of the brake pressure and the stop light information and from the time history of the danger potential.

24. Electronic control system according to claim 23, **characterized in that** the deceleration calculated by the danger calculator (10) is completely forwarded as a desired value to the brake actuators (11) in the case of a detected emergency braking situation.

25. Electronic control system according to any one of claims 1 to 24, **characterized in that** an arbitration unit is connected to the danger calculator (10) and to the driver intention module (29) and arbitrates parameters supplied by the driver intention module (29) against the control interventions determined by the danger calculator (10).

26. Electronic control system according to any one of claims 1 to 25, **characterized by** a model for the calculation of actuator-specific and actuator-non-specific danger potentials from quantities that are calculated or measured by devices of the vehicle.

27. Electronic control system according to claim 26, **characterized in that** the devices of the vehicle are long-range and/or short-range sensors, vehicle-movement-dynamics sensors, displacement sensors, pressure sensors, vehicle models and/or hydraulic models.

28. Method for determining at least one driver-independent intervention in a vehicle system, in which an intention of a driver is determined in a driver intention module (29),
in which furthermore surroundings data are determined by means of a surroundings sensor system (12), and in which a dangerous situation is determined from the determined surroundings data by means of a danger calculator (10), and with vehicle actuators that are driven in the case of a determined intervention,
**characterized in**
**that** the danger calculator (10) has a model for the calculation of danger potentials that take the activation time of the vehicle actuators (11, 13, 15, 16, 17, 18, 19) and longitudinal-dynamics and lateral-dynamics driving situations into consideration,
**that** graduated control interventions for the control of the vehicle actuators (11, 13, 15, 16, 17, 18, 19) are determined in dependence on the danger potentials,
**that** an assessment with the driver's intention determined in the driver intention module (29) is made in dependence on the influencing of the vehicle movement dynamics of the vehicle, said influencing being caused by the control interventions, and
**that** the graduated control interventions are enabled conditionally, are enabled or are disabled according to the result of the assessment.

29. Method according to claim 28, **characterized in that** the danger potentials are determined in a model in an actuator-independent and actuator-dependent manner.

**Revendications**

1. Système de commande électronique pour un véhicule,
avec un module de souhait du conducteur (29) pour la détermination d'un souhait du conducteur
avec un système de capteurs périphériques (12) pour la détermination de données périphériques
avec un calculateur de risques (10) pour la détermination d'une situation de risque à partir des données périphériques déterminées,
et avec des actionneurs de véhicule qui sont pilotés par le système de commande
**caractérisé en ce que**
le calculateur de risques (10) présente un modèle de calcul de potentiels de risques prenant en compte le temps d'activation des actionneurs de véhicule et des situations de conduite dynamiques dans le sens longitudinal ainsi que dynamiques dans le sens transversal,
des interventions de réglage échelonnées en fonction des potentiels de risques sont déterminées pour la commande des actionneurs de véhicule (11, 13, 15, 16, 17, 18, 19),
une évaluation est effectuée avec le souhait du conducteur déterminé dans le module de souhait du conducteur (29), en fonction de l'influence exercée par les interventions de réglage sur la dynamique de conduite du véhicule, et les interventions de réglage échelonnées sont validées sous condition, validées ou bloquées conformément au résultat de l'évaluation.

2. Système de commande électronique selon la revendication 1, **caractérisé en ce que** le mouvement de transfert entre la pédale d'accélération et la pédale de frein est déterminé dans le module de souhait du conducteur (29), pour la détermination de grandeurs caractéristiques pour le souhait du conducteur à partir des grandeurs d'entrées information de course de pédale d'accélération et de l'information de feu stop.

3. Système de commande électronique selon la revendication 2, **caractérisé en ce que** le temps de transfert entre les pédales est déterminé à partir des grandeurs d'entrée.

**4.** Système de commande électronique selon une des revendications 1 à 3, **caractérisé en ce que** le module de souhait du conducteur (29) met à la disposition d'une unité d'arbitrage (28) montée en aval les grandeurs caractéristiques déterminées pour le souhait du conducteur.

**5.** Système de commande électronique pour un véhicule selon la revendication 4, **caractérisé en ce que** le module de souhait du conducteur (29) détermine d'autres grandeurs caractéristiques portant sur un souhait de braquage et/ou un souhait d'accélération et les met à la disposition de l'unité d'arbitrage (28) montée en aval.

**6.** Système de commande électronique selon une des revendications 1 à 5, **caractérisé en ce que** le calculateur de risques (10) calcule les potentiels de risques à l'aide de données qui reproduisent au moins la vitesse longitudinale du véhicule, l'accélération longitudinale du véhicule, l'accélération transversale du véhicule, les distances à des objets pertinents dans la zone proche et/ou la zone lointaine, la vitesse relative par rapport à des objets pertinents dans la zone proche et/ou la zone lointaine et/ou leurs dérivées ainsi que des informations d'état sur des régulateurs de dynamique de conduite tels que ABS, assistance au freinage hydraulique HBA, ESP et similaires qui produisent, au moins en fonction de grandeurs caractéristiques de risque déterminées et liées à la dynamique longitudinale et/ou à la dynamique transversale, les grandeurs de réglage échelonnées dans leur action, dépendant du potentiel de risque, pour les freins, les moyens réversibles de protection des occupants et la position relative entre des moyens de protection des occupants et des dispositifs de réglage modifiant des occupants du véhicule.

**7.** Système de commande électronique selon une des revendications 1 à 6, **caractérisé en ce que** les interventions de réglage pour les actionneurs (11, 13, 15, 16, 17, 18, 19), en particulier pour les freins (11), s'effectuent de façon adaptée à la situation.

**8.** Système de commande électronique selon une des revendications 1 à 7, **caractérisé en ce que** le calculateur de risques (10) calcule des potentiels de risques qui produisent, au moins en fonction de grandeurs caractéristiques de risques déterminées liées à la dynamique longitudinale et/ou à la dynamique transversale, des grandeurs de réglages dépendantes pour la fermeture d'ouvertures de véhicule (17).

**9.** Système de commande électronique selon une des revendications 1 à 8, **caractérisé en ce que** le calculateur de risques (10) produit, toujours en fonction du potentiel de risques déterminé, des indications d'avertissement et/ou de guidage optiques et/ou haptiques pour l'avertissement et/ou le guidage du conducteur vers une réaction de conducteur adaptée à la situation de conduite actuelle et transmet ces indications d'avertissement et/ou de guidage directement au système d'actionneurs (13, 18, 16) pour le transfert.

**10.** Système de commande électronique selon la revendication 9, **caractérisé en ce que** les indications d'avertissement s'effectuent au moyen d'une pédale vibrante (16) et/ou d'un siège vibrant (13) et/ou d'un affichage (18).

**11.** Système de commande électronique selon une des revendications 9 à 10, **caractérisé en ce que** les indications de guidage s'effectuent au moyen d'une force de manoeuvre modifiée sur au moins une pédale (16) ou l'élément de direction.

**12.** Système de commande électronique selon une des revendications 1 à 11, **caractérisé en ce que** le calculateur de risques (10) calcule des potentiels de risques qui produisent, en fonction de grandeurs caractéristiques de risques déterminées liées à la dynamique longitudinale et/ou à la dynamique transversale, des informations pour les moyens non réversibles de protection des occupants et mettent à disposition des commandes des moyens non réversibles de protection des occupants.

**13.** Système de commande électronique selon une des revendications 1 à 12, **caractérisé en ce que** l'unité d'arbitrage (28) présente une machine d'état qui arbitre, vis-à-vis des interventions de réglage déterminées par le calculateur de risques (10), les grandeurs caractéristiques mises à disposition par le module de souhait du conducteur (29) telles que la course de pédale de frein, la vitesse de pédale de frein et/ou la course de pédale d'accélération, la vitesse de pédale d'accélération et le temps de transfert entre la pédale d'accélération et la pédale de frein et/ou l'état (allumé/éteint) du feu stop et/ou des pressions de freinage mesurées et calculées du système de freinage et/ou leurs dérivées et/ou l'accélération du véhicule et/ou les potentiels de risques déterminés par le calculateur de risques (10) et/ou leurs dérivées.

**14.** Système de commande électronique selon une des revendications 1 à 13, **caractérisé en ce que** la corrélation des grandeurs caractéristiques du module de souhait du conducteur (28) avec les interventions de réglage du calculateur de risques (10) est évaluée, et **en ce que**, en fonction du résultat de l'évaluation, les interventions de réglage sur le système d'actionneurs sont validées sous condition, validées ou bloquées.

15. Système de commande électronique selon les revendications 1 à 14, **caractérisé en ce que** la valeur des interventions de réglage est modifiée en fonction du résultat de l'évaluation.

16. Système de commande électronique selon une des revendications 1 à 15, **caractérisé en ce que** le calculateur de risques (10) détermine différents potentiels de risques et les combine pour la formation des interventions de réglage.

17. Système de commande électronique selon une des revendications 1 à 16 **caractérisé en ce qu'**un potentiel de risques est calculé à partir d'un système flou et/ou est calculé dans un modèle de dynamique de conduite.

18. Système de commande électronique selon une des revendications 1 à 17, **caractérisé en ce que** le calculateur de risques (10) détermine des potentiels de risques généraux et des potentiels de risques spéciaux, les potentiels de risques généraux étant indépendants des actionneurs, et les potentiels de risques spéciaux étant dépendants des actionneurs.

19. Système de commande électronique selon les revendications 1, 4, 11 à 17, **caractérisé en ce que** l'unité d'arbitrage (28) présente une machine d'état qui arbitre, vis-à-vis des interventions de freinage déterminées par le calculateur de risques, les grandeurs caractéristiques mises à disposition par le module de souhait du conducteur (29) telles que la course de pédale de frein, la vitesse de pédale de frein et/ou la course de pédale d'accélération, la vitesse de pédale d'accélération et le temps de transfert entre la pédale d'accélération et la pédale de frein et/ou l'état (allumé/éteint) du feu stop et/ou des pressions de freinage mesurées et calculées du système de freinage et/ou leurs dérivées et/ou l'accélération du véhicule et/ou les potentiels de risques déterminés par le calculateur de risques (10) et/ou leurs dérivées.

20. Système de commande électronique selon la revendication 19, **caractérisé en ce qu'**une intervention de freinage est déterminée en fonction des grandeurs caractéristiques course de pédale d'accélération, course de pédale de frein et/ou pressions de freinage et/ou accélération et/ou leurs dérivées et/ou d'une information de feu stop du module de souhait du conducteur représentant le souhait du conducteur, et **en ce que** des niveaux pour des décélérations maximales sont dérivés conformément à des valeurs de seuil de ces grandeurs caractéristiques et des potentiels de risques.

21. Système de commande électronique selon la revendication 20, **caractérisé en ce que** le degré du souhait de freinage du conducteur est défini par un nombre caractéristique qui est déterminé en fonction de la pondération des conditions suivantes

    a.) rapport de la course de pédale de frein au maximum de la course de pédale de frein,
    b.) rapport de la vitesse de pédale de frein au maximum de la vitesse de pédale de frein,
    c.) facteur qui évalue le temps de transfert de la pédale d'accélération à la pédale de frein.

22. Système de commande électronique selon la revendication 20, **caractérisé en ce que** le degré du souhait de freinage du conducteur est défini par un nombre caractéristique qui est déterminé en fonction de la pondération des conditions suivantes

    a.) rapport d'une pression de freinage souhaitée par le conducteur au maximum moyen d'une pression de freinage d'urgence,
    b.) rapport du gradient temporel de la pression de freinage souhaitée par le conducteur au gradient temporel moyen d'un maximum d'une pression de freinage d'urgence,
    c.) facteur qui évalue le temps de transfert de la pédale d'accélération à la pédale de frein.

23. Système de commande électronique selon la revendication 20 ou 21, **caractérisé en ce qu'**une situation de freinage d'urgence est dérivée à partir de la courbe temporelle de la pression de freinage et de l'information de feu stop et de la courbe temporelle du potentiel de risques.

24. Système de commande électronique selon la revendication 23, **caractérisé en ce que**, lors d'une situation détectée de freinage d'urgence, la décélération calculée par le calculateur de risques (10) est transmise entièrement en tant que valeur de consigne aux actionneurs de freinage (11).

**25.** Système de commande électronique selon une des revendications 1 à 24, **caractérisé en ce qu'**une unité d'arbitrage est raccordée au calculateur de risques (10) et au module de souhait du conducteur (29) et arbitre des grandeurs caractéristiques mises à disposition par le module de souhait du conducteur (29) vis-à-vis des interventions de réglage déterminées par le calculateur de risques (10).

**26.** Système de commande électronique selon une des revendications 1 à 25, **caractérisé par** un modèle de calcul des potentiels de risques spécifiques aux actionneurs et non spécifiques aux actionneurs à partir de grandeurs qui sont calculées ou mesurées par des équipements du véhicule.

**27.** Système de commande électronique selon la revendication 26, **caractérisé en ce que** les équipements du véhicule sont des capteurs de la zone lointaine et/ou de la zone proche, des capteurs de la dynamique de conduite, des capteurs de course, des capteurs de pression, des modèles de véhicule et/ou des modèles hydrauliques.

**28.** Procédé pour la détermination d'au moins une intervention indépendante du conducteur dans un système de véhicule dans lequel, dans un module de souhait du conducteur (29), un souhait du conducteur est déterminé, dans lequel en outre des données périphériques sont déterminées avec un système de capteurs périphériques (12), et dans lequel, avec un calculateur de risques (10), une situation de risque est déterminée à partir des données périphériques déterminées, et avec des actionneurs de véhicule qui sont pilotés lors de l'intervention déterminée, **caractérisé en ce que** le calculateur de risques (10) présente un modèle de calcul de potentiels de risques prenant en compte le temps d'activation des actionneurs de véhicule (11, 13, 15, 16, 17, 18, 19) et des situations de conduite dynamiques dans le sens longitudinal ainsi que dynamiques dans le sens transversal, **en ce que** des interventions de réglage échelonnées en fonction des potentiels de risques sont déterminées pour la commande des actionneurs de véhicule (11,13,15,16,17,18,19), une évaluation est effectuée avec le souhait du conducteur déterminé dans le module de souhait du conducteur (29), en fonction de l'influence exercée par les interventions de réglage sur la dynamique de conduite du véhicule, et les interventions de réglage échelonnées sont validées sous condition, validées ou bloquées conformément au résultat de l'évaluation.

**29.** Procédé selon la revendication 28, **caractérisé en ce que** les potentiels de risques sont déterminés dans un modèle d'une façon qui est indépendante des actionneurs et d'une façon qui dépend des actionneurs.

**Fig. 1**

- Sitz (13)
- Airbag (15)
- Haptisches Fahrpedal (16)
- Umfeldsensorik (12)
- Elektronisches Steuersystem (20)
- Fenster & Schiebedach (17)
- Elektronisches Bremssystem ABS/ESP (11)
- Kombi-instrumente (18)
- Reversibler Gurtstraffer (19)

Anforderung Sitzverstellung links
Anforderung Sitzverstellung rechts
Sitzverstellung links anhalten
Sitzverstellung rechts anhalten

Sitzbelegungsstatus links
Sitzbelegungsstatus rechts

Relativgeschwindigkeit Objekt
Aufprallrichtung, -ort

Anforderung Gaspedalstellung

Abstand Objekt
Relativgeschwindigkeit Objekt
Relativbeschleunigung Objekt
Status Objekt gültig
Status/Typ Objekt

Anforderung Schließung Fenster
Anforderung. Schließung Schiebedach

THZ Bremsdruck
Radbremsdruck
ESP aktiv
ESP Zusatzmoment
ABS aktiv
HBA aktiv
Fzg.geschwindigkeit
long. Fzg.beschleunigung
lat.Fzg.beschleunigung
Lenkradwinkel
Gaspedalweg
Gangwahlstufe
Bremslichtschalter

Verzögerungsanforderung

Gurtschlussschalter links
Gurtschlossschalter rechts

Gurtkraftanforderung links
Gurtkraftanforderung rechts
Verriegelungssignal links
Verriegelungssignal rechts

Abstandswarnung

Fig. 2

## Fig.3

**Zugehörigkeitsfunktionen**

EP 1 610 992 B1

Fig. 4

Fig.5

not supported, prefill, prebrake, extended brake assist

prefill/not supported (60)

s_aped

(62)

THR_S_APED2

THR_S_APED1

(61)

prebrake (63)

0

(64)

SMINFORAPIABLS

extended brake assist (65)

s_bped

**Fig. 6**

not supported, prefill

prefill 2 (74)

(75) && dp_xdyn_sen <=
Schwelle

Voraussetzung:
1. kein Bremspedalkontakt
2. Gaspedalkontakt

(76)

prefill 1 (73)

(71)

(72)

ddp_xdyn_sen >=
THR_DDP_XDYN_SEN_ACT

not supported (70)

THR_DS_APED1L    THR_DS_APED2L        THR_DS_APED2R        ds_aped

0

Pedal neg. Gradient          Pedal konstant          Pedal pos. Gradient

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19806687 A1
- WO 03006289 A
- EP 0976627 A1